(19) Europäisches Patentamt
European Patent Office
Office européen des brevets

(11) EP 4 458 871 A1

(12) EUROPEAN PATENT APPLICATION
published in accordance with Art. 153(4) EPC

(43) Date of publication:
**06.11.2024 Bulletin 2024/45**

(21) Application number: **23903776.5**

(22) Date of filing: **13.11.2023**

(51) International Patent Classification (IPC):
***C08F 210/16*** (2006.01) ***C08F 210/14*** (2006.01)
***C08F 4/659*** (2006.01) ***C08F 4/6592*** (2006.01)
***C08F 4/646*** (2006.01) ***C08F 4/02*** (2006.01)

(52) Cooperative Patent Classification (CPC):
**C08F 4/02; C08F 4/646; C08F 4/659; C08F 4/6592; C08F 210/14; C08F 210/16**

(86) International application number:
**PCT/KR2023/018159**

(87) International publication number:
**WO 2024/128573 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2022 KR 20220176239**
**09.11.2023 KR 20230154257**

(71) Applicant: **LG Chem, Ltd.**
**Yeongdeungpo-gu**
**Seoul 07336 (KR)**

(72) Inventors:
- **KIM, Byung Seok**
  **Daejeon 34122 (KR)**
- **KANG, Minyoung**
  **Daejeon 34122 (KR)**
- **LEE, Sung Min**
  **Daejeon 34122 (KR)**
- **LEE, Jinyoung**
  **Daejeon 34122 (KR)**
- **GWON, Donghyeon**
  **Daejeon 34122 (KR)**
- **JUNG, Yoonchul**
  **Daejeon 34122 (KR)**
- **LEE, Chaeeun**
  **Daejeon 34122 (KR)**
- **KIM, Seyoung**
  **Daejeon 34122 (KR)**
- **HAN, Chang Woan**
  **Daejeon 34122 (KR)**
- **HONG, Seok Bin**
  **Daejeon 34122 (KR)**
- **KIM, Youngkook**
  **Daejeon 34122 (KR)**
- **KIM, Dong Hyun**
  **Daejeon 34122 (KR)**
- **LEE, Suhyeon**
  **Daejeon 34122 (KR)**

(74) Representative: **Hoffmann Eitle**
**Patent- und Rechtsanwälte PartmbB**
**Arabellastraße 30**
**81925 München (DE)**

# (54) HYBRID METALLOCENE CATALYST AND METHOD FOR PREPARING POLYETHYLENE USING SAME

(57) Provided are a hybrid metallocene catalyst which is useful in the preparation of a polyethylene exhibiting a high dart drop impact strength property along with excellent processability, and a method of preparing the polyethylene using the same.



Processed by Luminess, 75001 PARIS (FR)

(Cont. next page)

【FIG. 1】

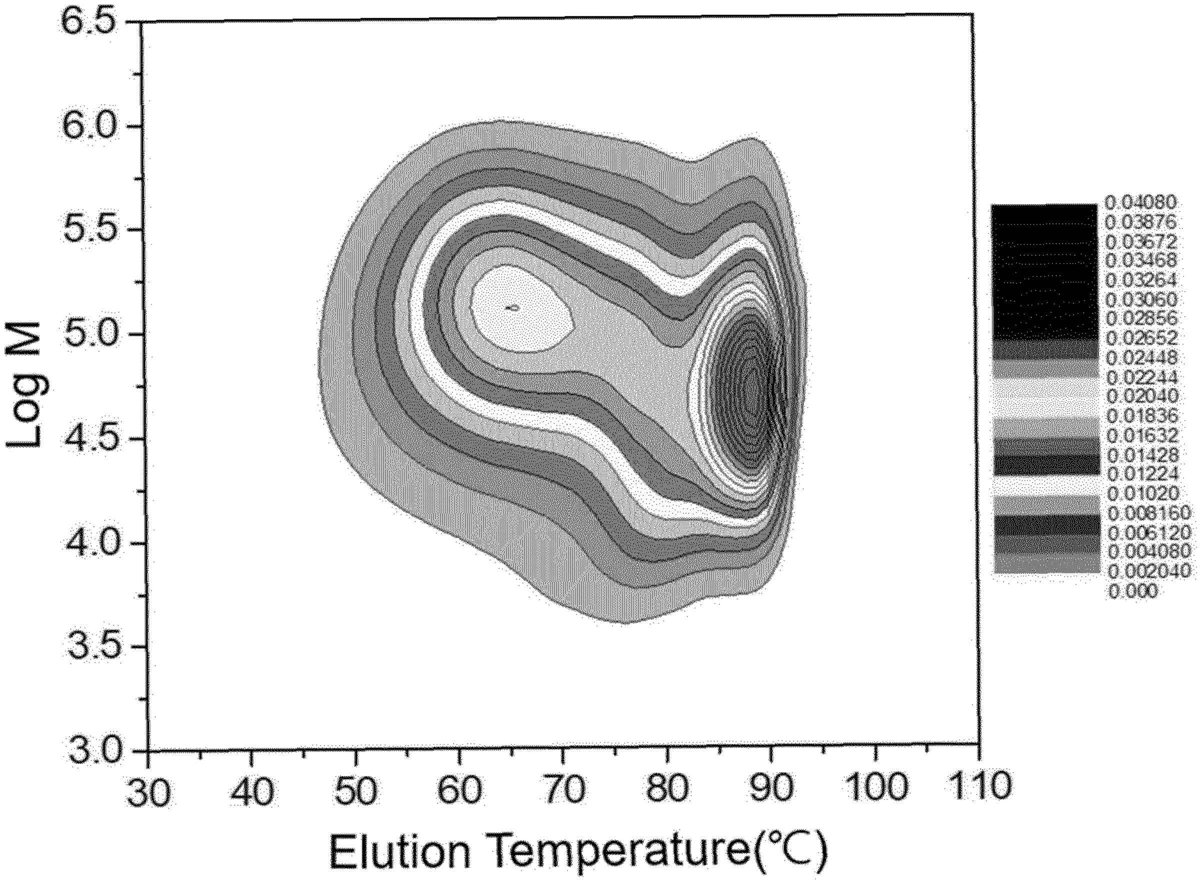
6.5
6.0
5.5
5.0
4.5
4.0
3.5
3.0
Log M
30
40
50
60
70
80
90
100
110
Elution Temperature(℃)
0.04080
0.03876
0.03672
0.03468
0.03264
0.03060
0.02856
0.02652
0.02448
0.02244
0.02040
0.01836
0.01632
0.01428
0.01224
0.01020
0.008160
0.006120
0.004080
0.002040
0.000

## Description

[TECHNICAL FIELD]

Cross-reference to Related Application

The present application is based on, and claims priority from, Korean Patent Application Nos. 10-2022-0176239 and 10-2023-0154257, filed on December 15, 2022 and November 9, 2023, respectively, the disclosures of which are hereby incorporated by reference herein in their entirety.

The present invention relates to a hybrid metallocene catalyst which is useful in the preparation of a polyethylene exhibiting a high dart drop impact strength property along with excellent processability, and a method of preparing the polyethylene using the same.

[BACKGROUND ART]

Olefin polymerization catalyst systems may be divided into Ziegler-Natta and metallocene catalyst systems, and these highly active catalyst systems have been developed in accordance with their characteristics. Ziegler-Natta catalysts have been widely applied to the existing commercial processes since they were developed in the 1950s. However, since the Ziegler-Natta catalyst is a multi-active site catalyst in which a plurality of active sites are mixed, it has a feature that a polymer has a broad molecular weight distribution, and since a compositional distribution of comonomers is not uniform, there is a problem that it is difficult to obtain desired physical properties.

In contrast, metallocene catalysts consist of a main catalyst having a transition metal compound as a main component and an organometallic compound cocatalyst having aluminum as a main component. Such catalysts are single site catalysts which are homogeneous complex catalysts, and offer a polymer having a narrow molecular weight distribution and a uniform compositional distribution of comonomers, due to the single site characteristics. The stereoregularity, copolymerization characteristics, molecular weight, crystallinity, etc. of the polymer may be controlled by changing a ligand structure of the catalyst and polymerization conditions.

Meanwhile, a linear low-density polyethylene (LLDPE), which is prepared by copolymerizing ethylene and alpha olefin at a low pressure using a polymerization catalyst, is a resin that has a narrow molecular weight distribution and short chain branches of a certain length and does not have long chain branches. Linear low-density polyethylene films have high breaking strength and elongation, excellent tear strength and dart drop impact strength, as well as general properties of polyethylene. Therefore, the use is increasing in stretch films, overlap films, and the like, to which application of the existing low-density polyethylene or high-density polyethylene is difficult.

With recent decarbonization, there is an increasing demand for high-performance linear low-density polyethylene to improve recyclability, and in addition, there is also an increasing demand for linear low-density polyethylene with excellent processability and dart drop impact strength.

Dart drop impact strength is a very important mechanical property that determines the resistance of a resin to various impacts.

However, linear low-density polyethylene has disadvantages of poor blown film processability and low transparency as compared with excellent mechanical properties. The blown film is a film which is produced by blowing air into molten plastic to inflate, and is also named an inflation film.

Generally, as the linear low-density polyethylene has a lower density, it has the characteristics of better transparency and higher dart drop impact strength. However, when a lot of alpha olefin comonomers are used to prepare low-density polyethylene, there is a problem that fouling may be frequently generated during a slurry polymerization process, and therefore, in the slurry polymerization process, products with a density of 0.915 g/cm$^3$ or more are mainly produced.

Accordingly, there is a demand for the development of a polyethylene that is able to realize excellent mechanical properties such as dart drop impact strength, etc. along with excellent processability while having a density of 0.915 g/cm$^3$ or more.

[DETAILED DESCRIPTION OF THE INVENTION]

[TECHNICAL PROBLEM]

In order to solve the problems of the prior art, there is provided a hybrid metallocene catalyst which is useful in the preparation of a polyethylene exhibiting a high dart drop impact strength property along with excellent processability.

There is also provided a method of preparing the polyethylene exhibiting the excellent dart drop impact strength property using the hybrid metallocene catalyst.

[TECHNICAL SOLUTION]

According to the present invention, there is provided a hybrid metallocene catalyst including a first transition metal compound represented by the following Formula 1; and a second transition metal compound represented by the following Formula 2:

[Formula 1]

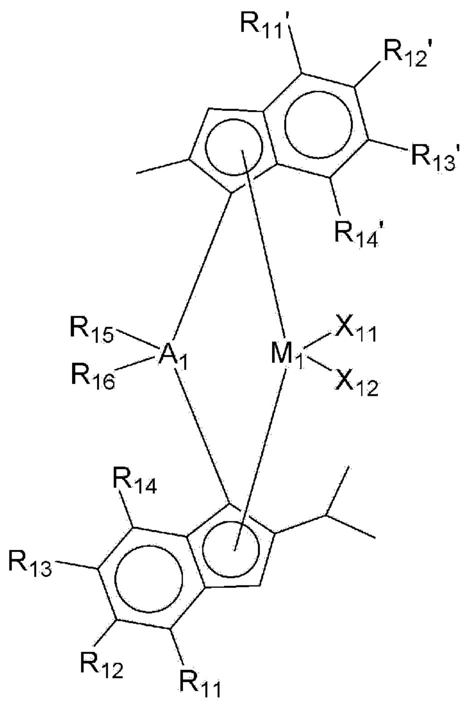

in Formula 1,

$M_1$ is a Group 4 transition metal,
$A_1$ is C, Si, or Ge,
$R_{11}$ and $R_{11}'$ are each independently $C_{6-20}$ aryl, $C_{7-20}$ alkylaryl, $C_{7-20}$ arylalkyl, or $C_{7-20}$ alkoxyaryl,
$R_{12}$, $R_{13}$, $R_{14}$, $R_{12}'$, $R_{13}'$, and $R_{14}'$ are each independently hydrogen, halogen, $C_{1-20}$ alkyl, $C_{1-20}$ alkenyl, $C_{1-20}$ alkoxy, $C_{6-20}$ aryl, $C_{7-20}$ alkylaryl, or $C_{7-20}$ arylalkyl,
one of $R_{15}$ and $R_{16}$ is $C_{2-20}$ alkoxyalkyl, and the other is $C_{1-20}$ alkyl, and
$X_{11}$ and $X_{12}$ are each independently halogen or $C_{1-20}$ alkyl,

[Formula 2]

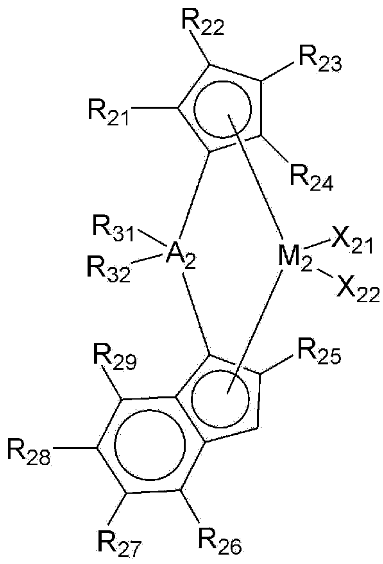

in Formula 2,
$M_2$ is a Group 4 transition metal,
$A_2$ is C, Si, or Ge,
$R_{21}$ to $R_{24}$ are each independently $C_{1-20}$ alkyl,
$R_{25}$ is $C_{1-20}$ alkyl,
$R_{26}$ is $C_{6-20}$ aryl unsubstituted or substituted with $C_{1-20}$ alkyl,
$R_{27}$ to $R_{29}$ are each independently any one of hydrogen, $C_{1-20}$ alkyl, $C_{2-20}$ alkenyl, $C_{6-20}$ aryl, $C_{7-20}$ alkylaryl, and $C_{7-20}$ arylalkyl, or two adjacent groups of $R_{27}$ to $R_{29}$ are linked to each other to form a $C_{4-8}$ aliphatic ring,
$R_{31}$ and $R_{32}$ are each independently $C_{1-20}$ alkyl, and
$X_{21}$ and $X_{22}$ are each independently halogen or $C_{1-20}$ alkyl.

According to the present invention, there is also provided a method of preparing a polyethylene, the method including the step of performing slurry polymerization of an ethylene monomer and an olefin monomer while introducing hydrogen in the presence of the above-described hybrid metallocene catalyst.

According to the present invention, there is also provided a polyethylene prepared by the above preparation method, the polyethylene satisfying the following requirements of (i) to (iii):

(i) a density measured according to the ASTM D1505 standard: 0.91 $g/cm^3$ to 0.93 $g/cm^3$
(ii) a melt index (MI) measured under conditions of 190°C and 2.16 kg according to the ASTM D1238 standard: 0.4 g/10 min to 1.2 g/10 min
(iii) a broad orthogonal crystalline fraction (BOCF) index calculated according to the following Equation 1: 1 or more

[Equation 1]

$$\text{BOCF index} = \{\text{Sum of regions}/188.5560176\} + \{1/297.9631479\}$$

in Equation 1,
the sum of regions is calculated through the steps of obtaining a contour plot of the contents of fractions according to an elution temperature (Te) and a weight average molecular weight (Log M) from CFC analysis of the polyethylene; deriving a coefficient map of the sum of regions by arbitrarily dividing the fractions according to Te and Log M into a plurality of regions, and assigning an arbitrary coefficient to each region according to the contribution of the fractions to the dart drop impact strength; obtaining the actual element value for each region by substituting the coefficient map of the sum of regions into the contour plot and calculating the area of a signal for each region; and calculating the sum of regions by multiplying the actual element value for each region by the coefficient value assigned above for each region to obtain the sum.

[ADVANTAGEOUS EFFECTS]

A hybrid metallocene catalyst according to the present invention exhibits high activity in the olefin polymerization, and may prepare a polyethylene having a high dart drop impact strength property along with excellent processability.

Accordingly, the polyethylene prepared using the hybrid metallocene catalyst has excellent processability, mechanical properties, and transparency, thereby being usefully applied to films, etc.

[BRIEF DESCRIPTION OF THE DRAWINGS]

FIG. 1 is a contour plot of the contents of fractions according to an elution temperature (Te) and a weight average molecular weight (Log M) through a cross fractionation chromatography (CFC) analysis of a polyethylene of Example 1;

FIG. 2 is a coefficient map of the sum of regions, which is obtained by dividing the fractions according to Te and Log M from the results of the CFC analysis of the polyethylene of Example 1 into regions, and assigning an arbitrary positive or negative coefficient to each region according to the contribution of the fractions to the dart drop impact strength;

FIG. 3 is a map showing the result of multiplying the actual element value for each region calculated from the results of CFC analysis of the polyethylene of Example 1 by the coefficient value for each region; and

FIG. 4 is a graph showing the relationship between the BOCF index and dart drop impact strength of polyethylenes of Examples 1 to 17 and Comparative Examples 1 to 9.

[DETAILED DESCRIPTION OF THE EMBODIMENTS]

As used herein, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

Further, in the present specification, "~" indicating a numerical range includes both the upper and lower limits of the numerical range. For example, A~B means A or more and B or less.

The present invention may be variously modified and have various forms, and specific exemplary embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a hybrid metallocene catalyst of the present invention and a method of preparing a polyethylene using the same will be described in detail.

The hybrid metallocene catalyst according to the present invention includes a first transition metal compound represented by the following Formula 1; and

a second transition metal compound represented by the following Formula 2:

[Formula 1]

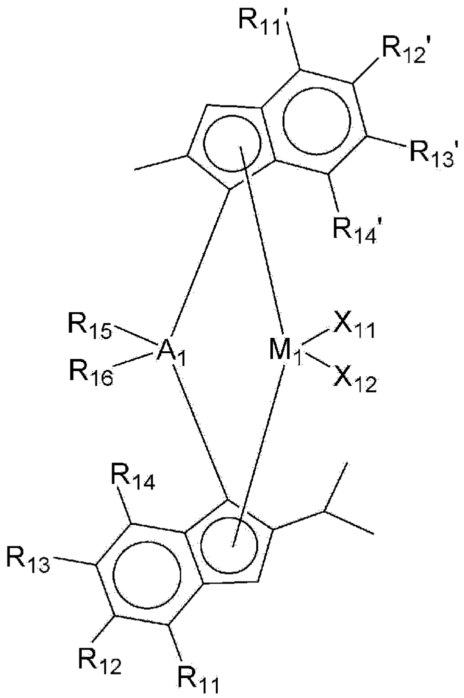

in Formula 1,
$M_1$ is a Group 4 transition metal,
$A_1$ is C, Si, or Ge,
$R_{11}$ and $R_{11}'$ are each independently $C_{6-20}$ aryl, $C_{7-20}$ alkylaryl, $C_{7-20}$ arylalkyl, or $C_{7-20}$ alkoxyaryl,
$R_{12}$, $R_{13}$, $R_{14}$, $R_{12}'$, $R_{13}'$, and $R_{14}'$ are each independently hydrogen, halogen, $C_{1-20}$ alkyl, $C_{1-20}$ alkenyl, $C_{1-20}$ alkoxy, $C_{6-20}$ aryl, $C_{7-20}$ alkylaryl, or $C_{7-20}$ arylalkyl,
one of $R_{15}$ and $R_{16}$ is $C_{2-20}$ alkoxyalkyl, and the other is $C_{1-20}$ alkyl, and
$X_{11}$ and $X_{12}$ are each independently halogen or $C_{1-20}$ alkyl,

[Formula 2]

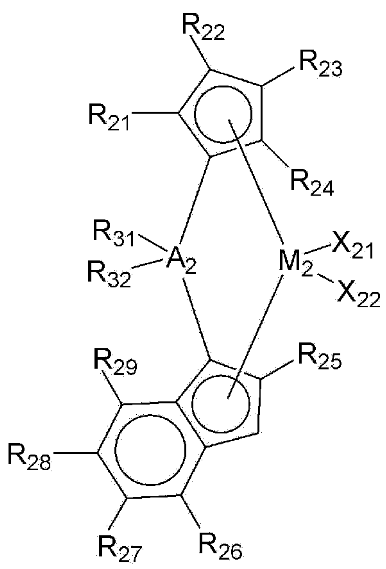

in Formula 2,

$M_2$ is a Group 4 transition metal,
$A_2$ is C, Si, or Ge,
$R_{21}$ to $R_{24}$ are each independently $C_{1-20}$ alkyl,
$R_{25}$ is $C_{1-20}$ alkyl,
$R_{26}$ is $C_{6-20}$ aryl unsubstituted or substituted with $C_{1-20}$ alkyl,
$R_{27}$ to $R_{29}$ are each independently any one of hydrogen, $C_{1-20}$ alkyl, $C_{2-20}$ alkenyl, $C_{6-20}$ aryl, $C_{7-20}$ alkylaryl, and $C_{7-20}$ arylalkyl, or two adjacent groups of $R_{27}$ to $R_{29}$ are linked to each other to form a $C_{4-8}$ aliphatic ring,
$R_{31}$ and $R_{32}$ are each independently $C_{1-20}$ alkyl, and
$X_{21}$ and $X_{22}$ are each independently halogen or $C_{1-20}$ alkyl.

In the present invention, the substituents of the formulae are described in more detail as follows.

The halogen may be fluorine (F), chlorine (Cl), bromine (Br), or iodine (I).

The $C_{1-20}$ alkyl may be linear, branched, or cyclic alkyl. Specifically, the $C_{1-20}$ alkyl may be linear alkyl having 1 to 20 carbon atoms; linear alkyl having 1 to 10 carbon atoms; linear alkyl having 1 to 5 carbon atoms; branched or cyclic alkyl having 3 to 20 carbon atoms; branched or cyclic alkyl having 3 to 15 carbon atoms; or branched or cyclic alkyl having 3 to 10 carbon atoms. More specifically, the alkyl having 1 to 20 carbon atoms may be a methyl group, an ethyl group, an n-propyl group, an iso-propyl group, an n-butyl group, an iso-butyl group, a tert-butyl group, an n-pentyl group, an iso-pentyl group, a cyclohexyl group, or the like.

The $C_{2-20}$ alkenyl may be linear, branched, or cyclic alkenyl. Specifically, the $C_{2-20}$ alkenyl may be linear alkenyl having 2 to 20 carbon atoms, linear alkenyl having 2 to 10 carbon atoms, linear alkenyl having 2 to 5 carbon atoms, branched alkenyl having 3 to 20 carbon atoms, branched alkenyl having 3 to 15 carbon atoms, branched alkenyl having 3 to 10 carbon atoms, cyclic alkenyl having 5 to 20 carbon atoms, or cyclic alkenyl having 5 to 10 carbon atoms. More specifically, the $C_{2-20}$ alkenyl may be ethenyl, propenyl, butenyl, pentenyl, cyclohexenyl or the like.

The $C_{1-20}$ alkoxy may be linear, branched, or cyclic alkoxy. Specifically, the $C_{1-20}$ alkoxy may be linear alkoxy having 1 to 20 carbon atoms; linear alkoxy having 1 to 10 carbon atoms; linear alkoxy having 1 to 5 carbon atoms; branched or cyclic alkoxy having 3 to 20 carbon atoms; branched or cyclic alkoxy having 3 to 15 carbon atoms; or branched or cyclic alkoxy having 3 to 10 carbon atoms. More specifically, the alkoxy having 1 to 20 carbon atoms may be a methoxy group, an ethoxy group, an n-propoxy group, iso-propoxy group, n-butoxy group, iso-butoxy group, tert-butoxy group, n-pentoxy group, iso-pentoxy group, neo-pentoxy group, cyclohexoxy group or the like.

The $C_{2-20}$ alkoxyalkyl includes a structure of $-R_y-O-R_z$, and may be a substituent in which one or more hydrogens of alkyl($-R_y$) are substituted with alkoxy($-O-R_z$). Specifically, the $C_{2-20}$ alkoxyalkyl may be a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group or the like.

The $C_{6-20}$ aryl may refer to monocyclic, bicyclic or tricyclic aromatic hydrocarbon. Specifically, the $C_{6-20}$ aryl may be a phenyl group, a naphthyl group, an anthracenyl group or the like.

The $C_{7-20}$ alkylaryl may refer to a substituent in which one or more hydrogens of aryl are substituted with alkyl. Specifically, the $C_{7-20}$ alkylaryl may be methylphenyl, ethylphenyl, n-propylphenyl, iso-propylphenyl, n-butylphenyl, iso-butylphenyl, tert-butylphenyl, cyclohexylphenyl or the like.

The $C_{7-20}$ arylalkyl may refer to a substituent in which one or more hydrogens of alkyl are substituted with aryl. Specifically, the $C_{7-20}$ arylalkyl may be benzyl, phenylpropyl, phenylhexyl or the like.

Further, the Groups 4 transition metal may be titanium, zirconium, hafnium or the like.

The hybrid metallocene catalyst according to the present invention may be a hybrid catalyst including a high-molecular-weight, highly copolymerizable first transition metal compound and a low-molecular-weight, low copolymerizable second transition metal compound at the same time.

Specifically, the first transition metal compound represented by Formula 1 contributes to preparation of a high-molecular-weight copolymer having a high SCB content, and the second transition metal compound represented by Formula 2 contributes to preparation of a low-molecular-weight copolymer having a low SCB (short chain branch) content.

Accordingly, the hybrid metallocene catalyst of the present invention may exhibit high copolymerizability for a polyethylene in the high molecular weight region due to the first transition metal compound while exhibiting low copolymerizability for a polyethylene in the low molecular weight region due to the action of the second transition metal compound. As a result, the polyethylene prepared using the hybrid metallocene catalyst according to the present invention has an appropriate level of crystallinity and a uniform lamellar structure. Further, since the lamellar structure has a structure connected by a tie chain, it may exhibit high dart drop impact strength. In other words, in order to increase the dart drop impact strength, it is necessary to have sufficiently low crystallinity such that high-molecular-weight chains, which may become ties, may diverge into the amorphous region.

With regard to the hybrid metallocene catalyst according to the present invention, the first transition metal compound contributes to preparation of a high-molecular-weight copolymer and exhibits a relatively high comonomer incorporation rate, as compared to the second transition metal compound.

In particular, since the first transition metal compound asymmetrically includes two indenyl derivatives which are different from each other in their structures and these two indenyl derivatives are connected by a bridge group, it may have high structural stability and may exhibit a high polymerization activity even when supported on a support.

In addition, since the carbon at position 4 of each indenyl derivative is substituted with a bulky group such as $C_{6-20}$ aryl substituted with $C_{1-20}$ alkyl, high activity may be maintained by creating an appropriate electronic environment.

Further, methyl and isopropyl substituents are introduced at the carbon at position 2 of each indenyl derivative, and OtBu capable of coordinating with MAO is located in the bridge group that connects the two indenyl ligands, thereby securing a stable activity through a higher loading rate. Accordingly, it is possible to prepare a polyolefin that has excellent processability and mechanical properties while exhibiting high activity and excellent morphology during olefin polymerization.

Specifically, in Formula 1, the central metal ($M_1$) may be a Group 4 transition metal of Ti, Zr, or Hf, and more specifically, Zr.

Further, in Formula 1, $A_1$ may be specifically Si.

Further, $R_{11}$ and $R_{11}$' may be each independently $C_{6-12}$ aryl, $C_{7-18}$ alkylaryl, or $C_{7-18}$ alkoxyaryl, and more specifically, phenyl, naphthyl, t-butylphenyl, 3,5-di-t-butylphenyl, 2,5-dimethylphenyl, or methoxyphenyl.

Further, $R_{12}$, $R_{13}$, $R_{14}$, $R_{12}$', $R_{13}$', and $R_{14}$' may be each hydrogen.

Further, one of $R_{15}$ and $R_{16}$ may be $C_{2-12}$ alkoxyalkyl, and the other may be $C_{1-8}$ alkyl, and more specifically, one of $R_{15}$ and $R_{16}$ may be t-butoxyhexyl, and the other may be methyl.

Further, $X_{11}$ and $X_{12}$ may be each independently chloro or methyl, and more specifically, $X_{11}$ and $X_{12}$ may be each chloro.

Accordingly, the first transition metal compound may be specifically a compound, in which, in Formula 1, $M_1$ is Ti, Zr, or Hf, $A_1$ is Si, $R_{11}$ and $R_{11}$' are each independently $C_{6-12}$ aryl, $C_{7-18}$ alkylaryl, or $C_{7-18}$ alkoxyaryl, $R_{12}$, $R_{13}$, $R_{14}$, $R_{12}$', $R_{13}$', and $R_{14}$' are each hydrogen, one of $R_{15}$ and $R_{16}$ is $C_{2-12}$ alkoxyalkyl, and the other is $C_{1-8}$ alkyl, and $X_{11}$ and $X_{12}$ may be each independently chloro or methyl.

More specifically, the first transition metal compound may be a compound, in which, in Formula 1, $M_1$ is Zr, $A_1$ is Si, $R_{11}$ and $R_{11}$' are each independently phenyl, naphthyl, t-butylphenyl, 3,5-di-t-butylphenyl, 2,5-dimethylphenyl, or methoxyphenyl, $R_{12}$, $R_{13}$, $R_{14}$, $R_{12}$', $R_{13}$', and $R_{14}$' are each independently hydrogen, one of $R_{15}$ and $R_{16}$ is t-butoxyhexyl, and the other is methyl, and $X_{11}$ and $X_{12}$ are each independently chloro.

Much more specifically, the first transition metal compound may be any one selected from the group consisting of the following compounds:

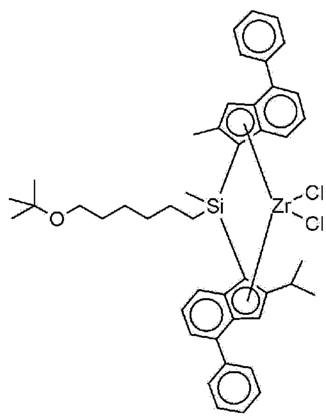

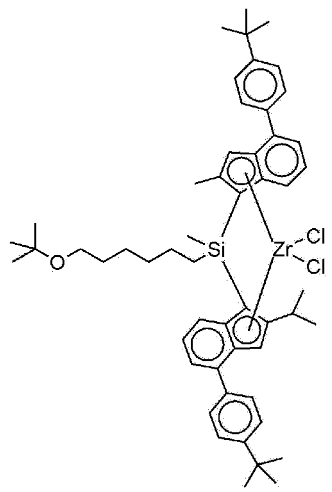

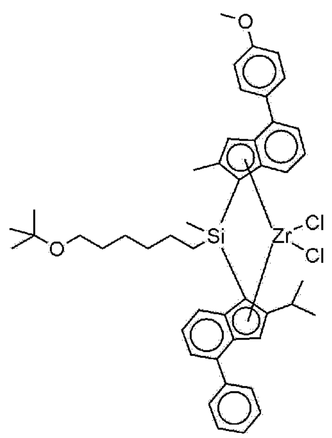

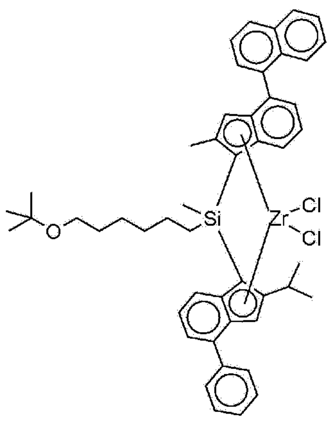 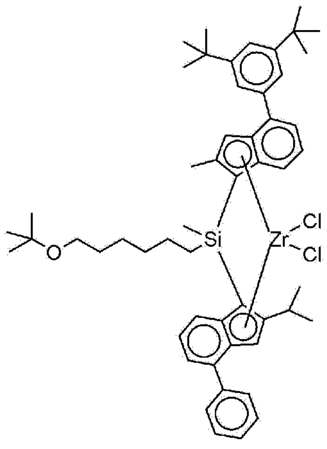 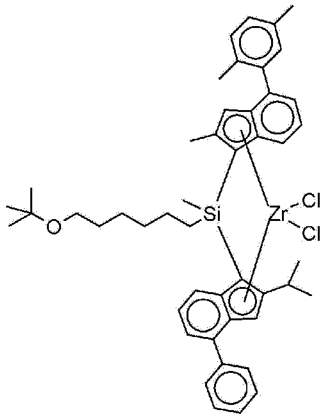

The first transition metal compound represented by Formula 1 may be synthesized by applying known reactions, and for more detailed synthesis methods, Synthesis Examples may be served as a reference.

Meanwhile, with regard to the hybrid metallocene catalyst according to the present invention, the second transition metal compound represented by Formula 2 contributes to preparation of a low-molecular-weight copolymer and exhibits a relatively low comonomer incorporation rate, as compared to the first transition metal compound.

Specifically, in Formula 2, $M_2$ may be Ti, Zr, or Hf, and more specifically, Zr or Hf.

Further, $A_2$ may be specifically Si.

Further, $R_{21}$ to $R_{24}$ may be each independently $C_{1-8}$ alkyl, and more specifically, $R_{21}$ to $R_{24}$ may be each methyl.

Further, $R_{25}$ may be $C_{1-8}$ alkyl, and more specifically, $R_{25}$ may be methyl.

Further, $R_{26}$ may be $C_{6-18}$ aryl unsubstituted or substituted with $C_{1-8}$ alkyl, and more specifically, $R_{26}$ may be phenyl, t-butylphenyl, naphthyl, or 2,5-dimethylphenyl.

Further, $R_{27}$ to $R_{29}$ are each independently hydrogen, or two adjacent groups of $R_{27}$ to $R_{29}$ are linked to each other to form a $C_{4-8}$ aliphatic ring such as cyclopentane or cyclohexane, and more specifically, $R_{27}$ to $R_{29}$ are each independently hydrogen, or two adjacent groups of $R_{27}$ to $R_{29}$ are linked to each other to form a cyclopentane ring.

Further, $R_{31}$ and $R_{32}$ may be each independently $C_{1-8}$ alkyl, and more specifically, $R_{31}$ and $R_{32}$ may be each methyl.

Further, $X_{31}$ and $X_{32}$ may be each independently chloro or methyl, and more specifically, chloro.

Accordingly, the second transition metal compound may be a compound, in which, in Formula 2, specifically, $M_2$ is Ti, Zr, or Hf, $A_2$ is Si, $R_{21}$ to $R_{24}$ are each independently $C_{1-8}$ alkyl, $R_{25}$ is $C_{1-8}$ alkyl, $R_{26}$ is $C_{6-18}$ aryl unsubstituted or substituted with $C_{1-8}$ alkyl, $R_{27}$ to $R_{29}$ are each independently hydrogen, or two adjacent groups of $R_{27}$ to $R_{29}$ are linked to each other to form a $C_{4-8}$ aliphatic ring, $R_{31}$ and $R_{32}$ are each independently $C_{1-8}$ alkyl, and $X_{31}$ and $X_{32}$ are each independently chloro or methyl.

More specifically, the second transition metal compound may be a compound, in which, in Formula 2, $M_2$ is Zr or Hf, $A_2$ is Si, $R_{21}$ to $R_{24}$ are each independently methyl, $R_{25}$ is methyl, $R_{26}$ is phenyl, t-butylphenyl, naphthyl, or 2,5-dimethylphenyl, $R_{27}$ to $R_{29}$ are each independently hydrogen, or two adjacent groups of $R_{27}$ to $R_{29}$ are linked to each other to form a cyclopentane ring, $R_{31}$ and $R_{32}$ are each independently methyl, and $X_{31}$ and $X_{32}$ are each independently chloro.

Much more specifically, the second transition metal compound represented by Formula 2 may be any one selected from the group consisting of the following compounds:

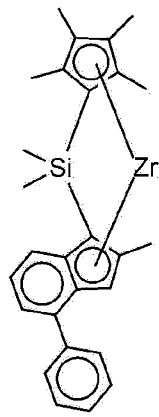
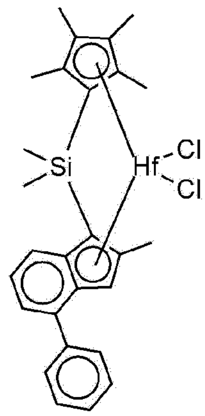
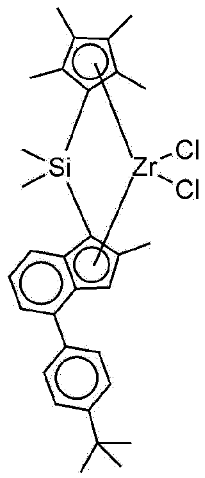

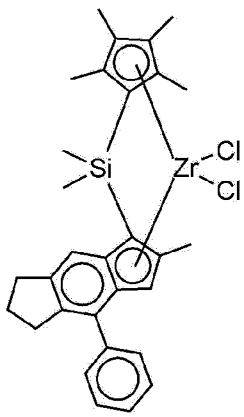
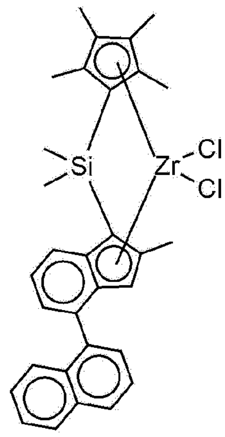
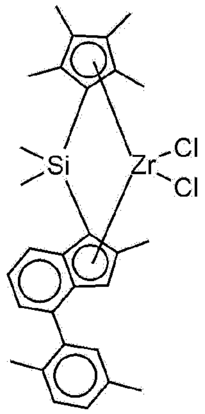

The second transition metal compound represented by Formula 2 may be synthesized by applying known reactions, and for more detailed synthesis methods, Synthesis Examples may be served as a reference.

With regard to the hybrid metallocene catalyst according to the present invention, the first transition metal compound has only a racemic isomer. In contrast, the second transition metal compound has no meso isomer and no racemic isomer.

As used herein, the term "racemic form" or "racemate" or "racemic isomer" means a form in which the same substituents on two ligands are on the opposite side to the plane containing the Group 4 transition metal represented by $M_1$ in Formula 1, for example, a transition metal such as zirconium (Zr) or hafnium (Hf), and the center of the ligand moiety.

Further, as used herein, the term "meso form" or "meso isomer" is a stereoisomer of the above-mentioned racemic isomer, and means a form in which the same substituents on two ligands are on the same side to the plane containing the Group 4 transition metal represented by $M_1$ in Formula 1 and the center of the ligand moiety.

Further, the hybrid metallocene catalyst according to the present invention may increase catalytic activity and may further improve physical properties of the prepared polymer by controlling a molar ratio of the first and second transition metal compounds.

For example, the hybrid metallocene catalyst may include the first and second transition metal compounds at a molar ratio of 1:6 to 6:1. When the above mixing ratio requirement is satisfied, excellent catalytic activity is maintained, the crystal structure of polyethylene prepared from the hybrid supported catalyst is further optimized, and the distribution of the lamellar structure becomes more uniform, thereby further improving dart drop impact strength and processability. More specifically, the molar ratio of the first and second transition metal compound may be 2:1 to 4:1, or 2:1 to 3:1.

Further, the hybrid metallocene catalyst according to the present invention may further include one or more of a support and a cocatalyst.

When the hybrid metallocene catalyst includes a support, the first and second transition metal compounds are used in the form of a supported catalyst of being supported on the support.

As the support, a support having highly reactive hydroxyl, silanol, or siloxane groups on the surface may be

used. To this end, those which are surface-modified by calcination or dried to remove water on the surface may be used.

For example, silica prepared by calcination of silica gel, silica, silica-alumina, silica-magnesia, etc., such as silica dried at a high temperature, may be used. These supports may usually include oxide, carbonate, sulfate, and nitrate components such as $Na_2O$, $K_2CO_3$, $BaSO_4$, and $Mg(NO_3)_2$, etc.

When used as the supported catalyst, the prepared polymer has excellent particle shape and bulk density, and the catalyst may be suitably used in traditional slurry polymerization, bulk polymerization, and gas phase polymerization processes. In addition, among various supports, silica supports support the transition metal compound by chemical binding of functional groups thereof, and therefore, there is little catalyst released from the surface of the support during the ethylene polymerization process, and as a result, when the polyethylene is prepared by slurry polymerization or gas phase polymerization, a fouling phenomenon, sticking to the wall surface of the reactor or with itself, may be minimized.

The support may have an average particle diameter (D50) of 20 $\mu$m to 40 $\mu$m. When the support has the above particle size, it may support the transition metal compound with greater efficiency, and as a result, catalytic activity may be increased. More specifically, the average particle diameter may be 20 $\mu$m or more, or 25 $\mu$m or more, and 40 $\mu$m or less, or 30 $\mu$m or less.

Meanwhile, in the present invention, the average particle diameter (D50) of the support means a particle diameter at the 50% point in cumulative particle number distribution according to particle size (particle diameter). The D50 may be measured using a laser diffraction method. Specifically, a support which is a measurement target is dispersed in a dispersion medium such as deionized water, etc., and then introduced into a commercially available laser diffraction particle size measurement instrument (e.g., Microtrac S3500), and the particle size distribution is calculated by measuring differences in diffraction pattern with respect to the particle size when particles pass through a laser beam. The average particle size may be determined by calculating the particle size at the 50% point in the cumulative particle number distribution according to particle size in the measurement instrument.

Further, when supported on the support, the first and second transition metal compounds may be supported, for example, in the content range of 1 mmol or more, or 10 mmol or more, or 15 mmol or more, or 17.5 mmol or more, and 100 mmol or less, or 80 mmol or less, or 60 mmol or less, or 52.5 mmol or less, based on 1,000 g of the silica support, respectively. When supported in the above content range, the supported catalyst exhibits appropriate activity, which may be advantageous in terms of maintaining catalytic activity and economic efficiency.

Further, the hybrid metallocene catalyst may further includes a cocatalyst in terms of improving high activity and process stability.

Specifically, the cocatalyst may include one or more of compounds represented by the following Formula 3.

[Formula 3] $-[Al(R_{41})-O]a-$

in Formula 3,

$R_{41}$ is halogen; or $C_{1-20}$ hydrocarbyl unsubstituted or substituted with halogen; and
a is an integer of 2 or more.

Meanwhile, in the present specification, the hydrocarbyl group is a monovalent functional group formed by removing a hydrogen atom from hydrocarbon, and may include alkyl, alkenyl, alkynyl, aryl, aralkyl, aralkenyl, aralkynyl, alkylaryl, alkenylaryl, alkynylaryl groups, etc. Further, a hydrocarbyl group having 1 to 20 carbon atoms may be a hydrocarbyl group having 1 to 15 carbon atoms or 1 to 10 carbon atoms. Specifically, the hydrocarbyl group having 1 to 20 carbon atoms may be a linear, branched, or cyclic alkyl group, such as a methyl group, an ethyl group, an n-propyl group, an iso-propyl group, an n-butyl group, an iso-butyl group, a tert-butyl group, an n-pentyl group, an n-hexyl group, an n-heptyl group, a cyclohexyl group, etc.; an aryl group, such as a phenyl group, a naphthyl group, an anthracenyl group, etc.

Examples of the compound represented by Formula 3 may include alkyl aluminoxane-based compounds such as methyl aluminoxane, ethyl aluminoxane, isobutyl aluminoxane, or butyl aluminoxane, etc., and any one thereof or a mixture of two or more thereof may be used.

Among the above compounds, the cocatalyst may be more specifically an alkyl aluminoxane-based cocatalyst such as methyl aluminoxane.

The alkyl aluminoxane-based cocatalyst stabilizes the first and second transition metal compounds and acts as a Lewis acid, thereby further improving the catalytic activity by including a metal element capable of forming a bond through a Lewis acid-base interaction with the functional group which is introduced into the bridge groups of the first and second transition metal compounds.

In addition, the amount of the cocatalyst to be used may be appropriately adjusted depending on the desired physical properties or effects of the catalyst and polyethylene. For example, when silica is used as the support, the cocatalyst may be supported in an amount of 100 g or more, or 1000 g or more, or 2000 g or more, and 6000 g or less,

or 5500 g or less, or 5400 g or less, based on the weight of the support, e.g., 1,000 g of silica.

The hybrid metallocene catalyst according to the present invention having the above-described structure may be prepared by a preparation method including the step of supporting the cocatalyst compound on the support, and the step of supporting the first and second transition metal compounds on the support, wherein the supporting order of the cocatalyst and the first and second transition metal compounds may vary as needed, and the supporting order of the first and second transition metal compounds may also vary as needed. The first and second transition metal compounds may be supported at the same time. Considering the effect of the supported catalyst with the structure which is determined according to the supporting order, sequentially supporting the first and second transition metal compounds after supporting the cocatalyst on the support ensures that the prepared supported catalyst has high catalytic activity and superior process stability in the preparation process of polyethylene.

As described above, the hybrid metallocene catalyst according to the present invention may exhibit excellent catalytic activity by including the first and second transition metal compounds with specific structures. Accordingly, the hybrid metallocene catalyst may be suitably used in the polymerization of olefinic monomers.

Accordingly, in the present invention, provided is a method of preparing an olefinic polymer, specifically, a polyethylene, the method including the step of polymerizing olefinic monomers in the presence of the above hybrid metallocene catalyst.

The method of preparing the polyethylene according to the present invention includes the step of performing slurry polymerization of the ethylene monomer and the olefin monomer while introducing hydrogen in the presence of the above hybrid metallocene catalyst.

The olefinic monomer may be ethylene, alpha-olefin, cyclic olefin, diene olefin or triene olefin having two or more double bonds.

Specific examples of the olefinic monomer may include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alpha-methylstyrene, divinylbenzene, 3-chloromethylstyrene, etc., and two or more of these monomers may be also mixed and copolymerized. More specifically, the olefinic monomer may be 1-hexene.

The amount of the olefinic monomer to be added may be determined depending on the physical properties of the polyethylene to be prepared. For example, considering the physical properties of the polyethylene to be achieved in the present invention and the effect of improving high dart drop impact strength and processability, the olefinic monomer may be introduced in an amount of 4% by weight to 15% by weight, based on the total weight of the monomers including the ethylene monomer and the olefin monomer. More specifically, the olefinic monomer may be introduced in an amount of 4% by weight or more, or 5% by weight or more, or 5.5% by weight or more, and 15% by weight or less, or 14.8% by weight or less, or 14.6% by weight or less, based on the total weight of the monomers including the ethylene monomer and the olefin monomer.

The polymerization reaction is performed under a hydrogen input condition.

Specifically, hydrogen may be introduced in an amount of 5 ppm to 45 ppm, more specifically, 5 ppm or more, or 7 ppm or more, or 10 ppm or more, and 45 ppm or less, or 40 ppm or less, or 35 ppm or less, based on the total weight of the monomers including the ethylene monomer and the olefin monomer. When introduced in the above range, it is easier to achieve the above-described physical properties of the polyethylene. When the polymerization reaction is performed under no hydrogen input condition, a melt index (MI) of the prepared polyethylene is greatly lowered, making it impossible to achieve the MI requirement of 0.4 g/10 min to 1.2 g/10 min of polyethylene, which is desired in the present invention.

The polymerization reaction may be performed by a slurry polymerization reaction.

Accordingly, the polymerization reaction may be performed using a single continuous slurry polymerization reactor or a loop slurry reactor.

In addition, the hybrid supported catalyst may be injected after being dissolved or diluted in an aliphatic hydrocarbon solvent with 4 to 12 carbon atoms, e.g., isobutane, pentane, hexane, heptane, nonane, decane, and isomers thereof, an aromatic hydrocarbon solvent, such as toluene and benzene, or a hydrocarbon solvent substituted with a chlorine atom, such as dichloromethane or chlorobenzene, etc. The solvent used here is preferably treated with a small amount of alkyl aluminum to remove a small amount of water or air, which acts as a catalyst poison. It is also possible to further use a cocatalyst.

Further, the polymerization reaction may be performed at a temperature of 40°C or higher, or 60°C or higher, or 80°C or higher, and 110°C or lower, 100°C or lower, or 90°C or lower. In addition, when the pressure condition is further controlled during the polymerization reaction, the reaction may be performed under a pressure of 5 bar or more, or 10 bar or more, or 20 bar or more, and 50 bar or less, or 45 bar or less, or 40 bar or less. When the polymerization proceeds under such temperature and pressure, the desired physical properties of polyethylene may be more easily realized.

The polyethylene prepared by the above preparation method has a uniformly distributed lamellar structure together with an appropriate level of crystallinity. Therefore, the polyethylene exhibits high dart drop impact strength and excellent processability. In a preferred embodiment, the polyethylene may be an ethylene/1-hexene copolymer.

Specifically, the polyethylene prepared using the hybrid supported catalyst satisfies the following requirements of (i) to (iii):

(i) a density measured according to the ASTM D1505 standard: 0.91 g/cm$^3$ to 0.93 g/cm$^3$

(ii) a melt index (MI) measured under conditions of 190°C and 2.16 kg according to the ASTM D1238 standard: 0.4 g/10 min to 1.2 g/10 min

(iii) a broad orthogonal crystalline fraction (BOCF) index calculated according to the following Equation 1: 1 or more

[Equation 1]

$$\text{BOCF index} = \{\text{Sum of regions}/188.5560176\} + \{1/297.9631479\}$$

in Equation 1, the sum of regions is calculated through the steps of obtaining a contour plot of the contents of fractions according to an elution temperature (Te) and a weight average molecular weight (Log M) from CFC analysis of the polyethylene; deriving a coefficient map of the sum of regions by arbitrarily dividing the fractions according to Te and Log M into a plurality of regions, and assigning an arbitrary coefficient to each region according to the contribution of the fractions to the dart drop impact strength; obtaining the actual element value for each region by substituting the coefficient map of the sum of regions into the contour plot and calculating the area of a signal for each region; and calculating the sum of regions by multiplying the actual element value for each region by the coefficient value assigned above for each region to obtain the sum.

In general, the dart drop impact strength of linear low-density polyethylene increases when lamellar structures with an appropriate level of crystallinity are connected by tie chains. In other words, in order to increase the dart drop impact strength, it is necessary to have sufficiently low crystallinity such that high-molecular-weight chains, which may become ties, may diverge into the amorphous region.

Based on the results of CFC analysis, the present inventors derived the coefficient map of the sum of regions according to the contribution of the polyethylene fractions to the dart drop impact strength, and created Equation 1, which defines the BOCF index, through linear regression.

Among resins with the same density and melt index, those showing high dart drop impact strength have a high content of fractions that greatly contribute to the dart drop impact strength. The parameter representing the same is named the BOCF index in the present invention, and is expressed as in Equation 1 above.

In detail, as shown in FIG. 1, a contour plot is obtained, which shows the contents of the fractions according to an elution temperature (Te) and a weight average molecular weight (log M) from the CFC analysis of polyethylene. At this time, the contour plot has the elution temperature (Te) on the x-axis and the logarithmic value of the weight average molecular weight (log M) on the y-axis. FIG. 1 is a contour plot obtained from the CFC analysis of the polyethylene of Example 1 below, and is only an example to explain the present invention, and the present invention is not limited thereto.

Next, as shown in FIG. 2, the fractions according to Te and Log M are arbitrarily divided by region, and a positive or negative coefficient is arbitrarily assigned to each region depending on the contribution of the fractions to the dart drop impact strength, thereby deriving a coefficient map of the sum of regions. At this time, the coefficient map of the sum of regions has the elution temperature (Te) on the x-axis and the logarithmic value (log M) of the weight average molecular weight on the y-axis.

In the coefficient map of the sum of regions, a fraction corresponding to a given elution temperature (Te) and a given weight average molecular weight (log M) may be expressed as CFC (Te, Log M).

Further, with regard to assigning of a positive or negative coefficient to each region, a high positive coefficient is assigned to the region of the fraction that may increase the dart drop impact strength, and conversely, a negative coefficient is given to the fraction that may inhibit the dart drop impact strength.

For example, FIG. 2 shows a coefficient map of the sum of regions, which is derived by arbitrarily dividing the fractions according to Te and Log M into LCHW (low crystalline-high molecular weight), MCHW (medium crystalline-high molecular weight), HCHW (high crystalline-high molecular weight), LCMW (low crystalline-medium molecular weight), MCMW (medium crystalline-medium molecular weight), HCMW (high crystalline-medium molecular weight), LCLW (low crystalline-low molecular weight), MCLW (medium crystalline-low molecular weight), HCLW (high crystalline-low molecular weight), LW (low molecular weight), HC (high crystalline), HC&LW (high crystalline&low molecular weight) and SF (soluble fraction) regions, respectively, and assigning a coefficient of 60, 40, 40, 40, 30, 0, 0, 0, 0, -10, - 10, -25, and 20 to each region according to the contribution of the fractions to the dart drop impact strength. FIG. 2 is a coefficient

map of the sum of regions of the polyethylene of Example 1 below, and is only an example to explain the present invention, and the present invention is not limited thereto.

In addition, although not shown in FIG. 2, when dividing the fractions according to Te and Log M into each region, a HW (high molecular weight) region corresponding to log M = 6.5 to 8, and a ULW (ultra-low molecular weight) region corresponding to log M = 2.0 to 3.0 may be further divided, and in this case, an arbitrary coefficient, e.g., 0, may also be assigned to these regions.

Next, the coefficient map of the sum of regions is substituted into the contour plot, and the actual element value for each region, i.e., the area of a signal for each region is calculated using a sigma equation of Equation 2 below.

[Equation 2]

$$\text{Actual element value for each region} = \sum_{Te}\sum_{n} CFC\ (Te,\ n/10)$$

in Equation 2, Te represents an elution temperature, n=10 x log M, wherein M represents a weight average molecular weight (g/mol).

Next, the actual element value for each region is multiplied by the coefficient value assigned above for each region to obtain the sum, thereby calculating the sum of regions, which is substituted into Equation 1 to calculate the BOCF index.

FIG. 3 is a map showing the result of multiplying the actual element value for each region, which is calculated by the above method from the results of CFC analysis of the polyethylene of Example 1 below, by the coefficient value for each region, and is only an example to explain the present invention, and the present invention is not limited thereto.

Meanwhile, the cross fractionation chromatography (CFC) analysis method and conditions for calculating the BOCF index are as described in Experimental Example below.

The polyethylene according to the present invention has a BOCF index of 1 or more, more specifically, 1 to 1.5, or 1 to 1.3, which calculated according to Equation 1. As the polyethylene has a BOCF index in the above range, it may exhibit the high dart drop impact strength.

Further, the polyethylene according to the present invention satisfies a density of 0.91 g/cm$^3$ to 0.93 g/cm$^3$, as measured according to the ASTM D1505 standard, and a melt index (MI) of 0.4 g/10 min to 1.2 g/10 min, as measured under conditions of 190°C and 2.16 kg according to the ASTM D1238 standard.

Specifically, the polyethylene has a density of 0.91 g/cm$^3$ or more, or 0.915 g/cm$^3$ or more, 0.93 g/cm$^3$ or less, or 0.925 g/cm$^3$ or less, or 0.921 g/cm$^3$ or less, as measured according to the ASTM D1505 standard. In general, as the density of polyethylene increases, the dart drop impact strength decreases. According to the present inventors' research, a high-density polyethylene having more than 0.93 g/cm$^3$ shows a low dart drop impact strength of 300 gf or less. Meanwhile, the polyethylene according to the present invention exhibits excellent dart drop impact strength, since it has a density within the above range.

Further, the polyethylene has a melt index ($MI_{2.16}$) of 0.4 g/10 min or more, or 0.45 g/10 min or more, and 1.2 g/10 min or less, or 1.18 g/10 min or less, or 1.15g/10 min or less, as measured under conditions of 190°C and 2.16 kg according to the ASTM D1238 standard.

As satisfying the requirements of the low density and the optimal range of melt index along with the high BOCF index, the polyethylene may exhibit the high dart drop impact strength along with excellent processability.

Specifically, the polyethylene has a dart drop impact strength of 1800 gf or more, more specifically 1800 gf to 2300 gf, as measured according to the ASTM D1709 [Method A], after producing a polyethylene film (Blown-Up Ratio (BUR) of 2 to 3, more specifically 2.5, and a film thickness of 45 μm to 55 μm, more specifically 50 μm) using a film applicator.

As described, the polyethylene prepared by the above preparation method using the hybrid supported catalyst of the present invention has excellent processability and dart drop impact strength property, and may be applied in a variety of ways depending on the purpose, and in particular, it may be usefully applied to the production of films requiring high mechanical properties.

Hereinafter, preferred exemplary embodiments will be provided for better understanding of the present invention. However, the following exemplary embodiments are provided only for understanding the present invention more easily, but the content of the present invention is not limited thereby.

Meanwhile, in the present specification, room temperature means 23±5°C.

**<Preparation of Transition Metal Compound>**

**Synthesis Example 1**

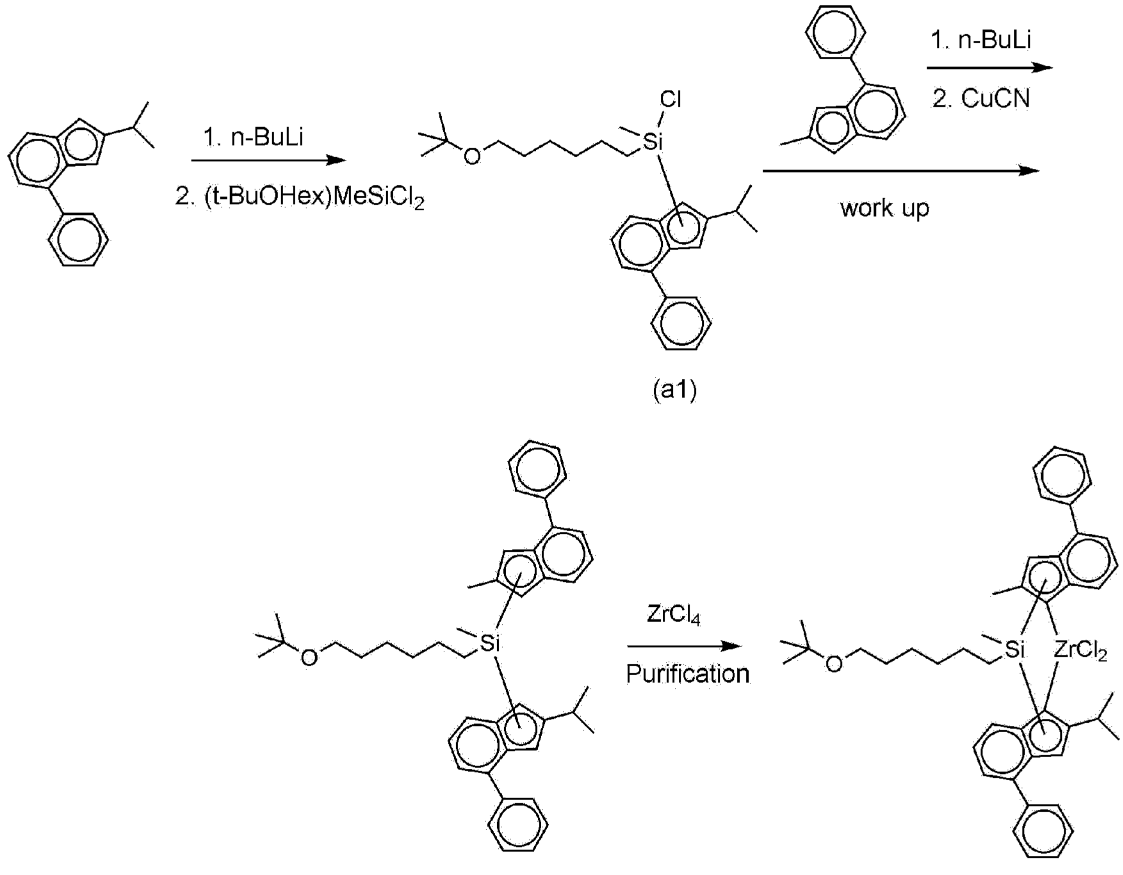


(a1)

(a2) (A-1)

2-Isopropyl-4-phenyl-indene (1 equivalent weight) was dissolved in MTBE (0.3 M), and to the resulting solution, n-BuLi (1.05 equivalent weights) was slowly added dropwise at - 25°C, followed by stirring at room temperature for 3 hours. To the resulting product, (t-BuOHex)$MeSiCl_2$ (1.05 equivalent weights) was introduced at -10°C, and stirred at room temperature overnight to prepare a mono-Si compound (a1)-containing solution.

In another stirrer, 2-methyl-4-phenyl-indene (1 equivalent weight) was dissolved in MTBE (0.3 M), and to the resulting solution, n-BuLi (1.05 equivalent weight) was slowly added dropwise at -25°C, followed by stirring at room temperature for 3 hours. To the resulting product, CuCN (2 mol%) was introduced, and stirred for 30 minutes, and the mono-Si compound (a1)-containing solution prepared above was introduced, and then stirred at room temperature overnight, followed by work-up with water and drying. Thus, a ligand (a2) was obtained.

The ligand (a2) was dissolved in toluene/ether (volume ratio of 2/1, 0.53 M), n-BuLi (2.05 equivalent weights) was introduced to the resulting solution at -25°C, and then stirred at room temperature for 5 hours to prepare a lithiated ligand.

A slurry which was prepared by mixing $ZrCl_4$ (1 equivalent weight) with toluene (0.17 M) in a separate flask was introduced to the lithiated ligand, and stirred at room temperature overnight. When the reaction was completed, the solvent was dried under vacuum, DCM was introduced to the dry product, and LiCl was removed by filtration. The filtrate was dried under vacuum and recrystallized at room temperature by adding DCM and hexane. Thereafter, the produced solid was filtered and dried under vacuum to obtain a solid-phase transition metal compound (A-1).

$^1H$ NMR (500MHz, $CDCl_3$, 7.26ppm): 0.82 (3H, t), 1.00 (4H, m), 1.13 (9H, s), 1.35 (9H, s), 1.44-1.61 (4H, m), 1.53 (6H, d), 1.80 (2H, m), 2.18 (3H, s), 3.21 (1H, m), 3.31 (2H, t), 6.61 (1H, s), 6.95 (1H, s), 7.28 (2H, m), 7.39 (5H,m), 7.44 (1H, m), 7.53 (5.5H, m), 7.62 (0.5H, d)

**Synthesis Example 2**

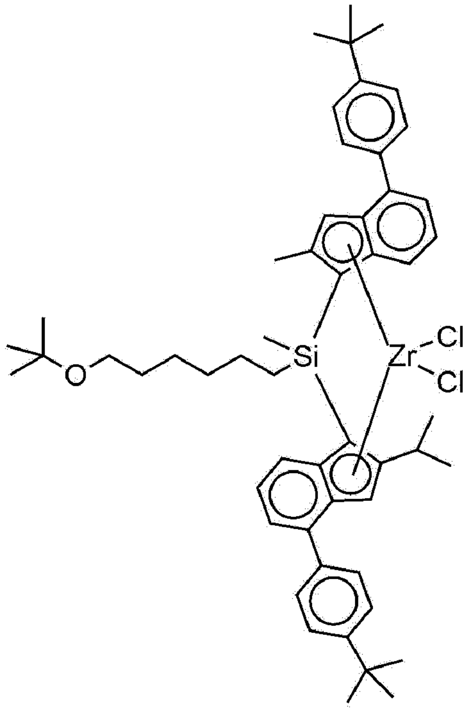

(A-2)

A transition metal compound (A-2) having the above structure was prepared in the same manner as in Synthesis Example 1, except that 2-isopropyl-4-(4-t-butyl-phenyl)indene was used instead of 2-isopropyl-4-phenyl-indene, and 2-methyl-4-(4-t-butyl-phenyl)indene was used instead of 2-methyl-4-phenyl-indene.
$^1$H NMR (500MHz, $CDCl_3$, 7.26ppm): 0.89 (3H, t), 1.08 (2H, m), 1.20 (9H, s), 1.35 (24H, s,m), 1.51 (2H, m), 1.61 (2H, m), 1.66 (2H, m), 1.88 (2H, m), 2.25 (3H, s), 3.28 (1H, m), 3.38 (2H, t), 6.98 (1H, s), 7.02 (1H, s), 7.11 (2H, dq), 7.36 (2H, dd), 7.46 (4H, dd), 7.51 (1H, m), 7.60 (4.5H, m), 7.70 (0.5H, d)

**Synthesis Example 3**

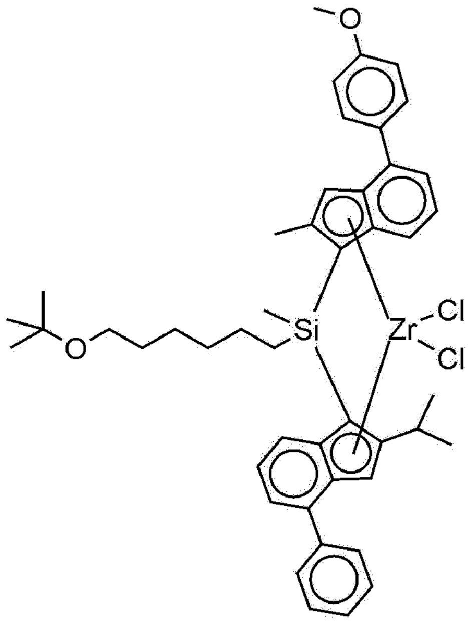

(A-3)

A transition metal compound (A-3) having the above structure was prepared in the same manner as in Synthesis Example 1, except that 2-methyl-4-(4-methoxy-phenyl)indene was used instead of 2-methyl-4-phenyl-indene.
$^1$H NMR (500MHz, $CDCl_3$, 7.26ppm): 0.88 (3H, t), 1.06 (2H, m), 1.19 (9H, s), 1.34 (24H, s,m), 1.50 (2H, m), 1.60 (2H, m), 1.64 (2H, m), 1.87 (2H, m), 2.24 (3H, s), 3.26 (1H, m), 3.36 (2H, t), 3.85 (3H, s), 6.97 (1H, s), 7.00 (1H, s), 7.10 (2H, m), 7.32 (1H, m), 7.42 (2H, m), 7.46 (4H, m), 7.56 (1H, m), 7.70 (4.5H, m), 7.74 (0.5H, d)

**Synthesis Example 4**

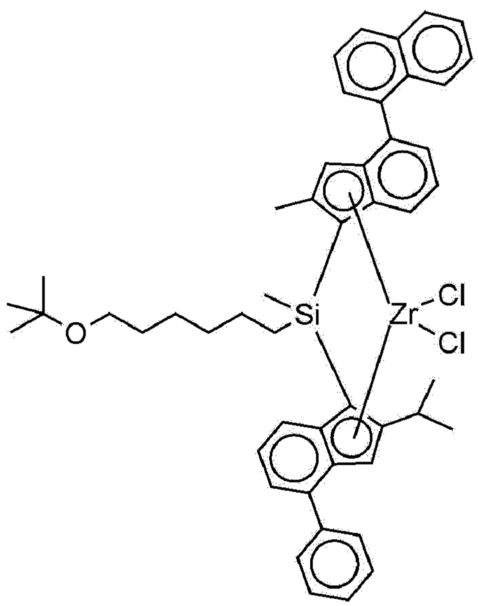

(A-4)

A transition metal compound (A-4) having the above structure was prepared in the same manner as in Synthesis Example 1, except that 2-methyl-4-naphthyl-indene was used instead of 2-methyl-4-phenyl-indene.
$^1$H NMR (500MHz, $CDCl_3$, 7.26ppm): 0.82 (1.5H, t), 1.01 (3.5H, m), 1.14 (9H, s), 1.40 (9H, s), 1.52 (8H, m), 1.65 (4H, m), 1.77 (2H, m), 2.21 (3H, s), 3.25 (1H, m), 3.33 (2H, t), 6.58 (1H, s), 6.94 (1H, s), 7.15 (1H, t), 7.28 (5H, m), 7.40 (4H, m), 7.44 (3H, m), 7.63 (2.5H, m), 7.82 (2.5H, d)

**Synthesis Example 5**

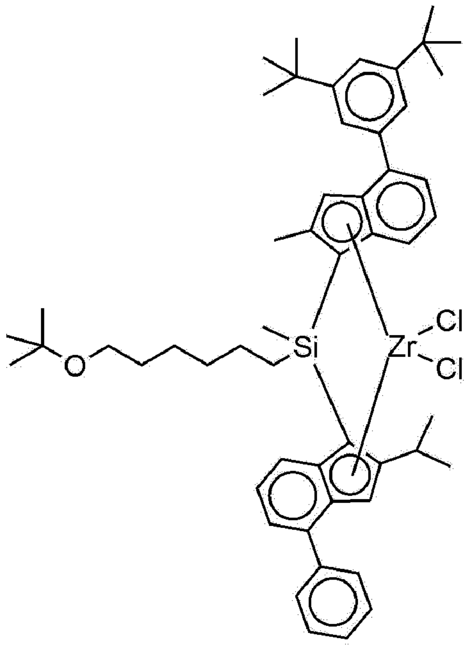

(A-5)

A transition metal compound (A-5) having the above structure was prepared in the same manner as in Synthesis Example 1, except that 2-methyl-4-(3,5-di-t-butyl-phenyl)indene was used instead of 2-methyl-4-phenyl-indene.
$^1$H NMR (500MHz, $CDCl_3$, 7.26ppm): 0.85 (5H, m), 1.15 (9H, s), 1.32 (20H, s,m), 1.42 (8H, m), 1.59 (2H, m), 1.83 (2H, m), 2.22 (3H, s), 3.27 (1H, m), 3.37 (2H, t), 6.75 (1H, s), 6.87 (1H, s), 7.12 (2H, m), 7.30 (1H, m), 7.42 (2H, m), 7.46 (3H, m), 7.56 (1H, m),7.60 (s, 1H), 7.70 (2.5H, m), 7.74 (1.5H, s,d)

**Synthesis Example 6**

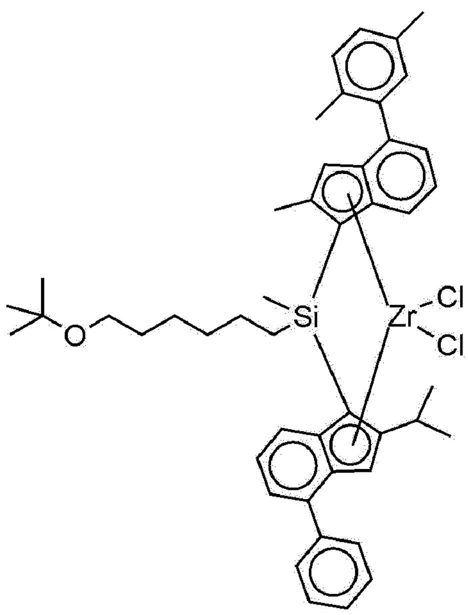

(A-6)

A transition metal compound (A-6) having the above structure was prepared in the same manner as in Synthesis Example 1, except that 2-methyl-4-(3,6-dimethyl-phenyl)indene was used instead of 2-methyl-4-phenyl-indene.
$^1$H NMR (500MHz, $CDCl_3$, 7.26ppm): 0.89 (5H, m), 1.17 (9H, s), 1.28 (8H, m), 1.43 (2H, m), 1.35 (2H, m), 1.59(3H, s), 1.79 (5H, m), 2.21 (3H, s), 3.25 (1H, m), 3.34 (2H, t), 6.51 (1H, s), 6.88 (1H, s), 7.20 (2H, m), 7.30 (1H, m), 7.36 (2H, m), 7.43 (3H, m), 7.57(3H, m), 7.60 (2H, m), 7.70 (1H, s)

**Synthesis Example 7**

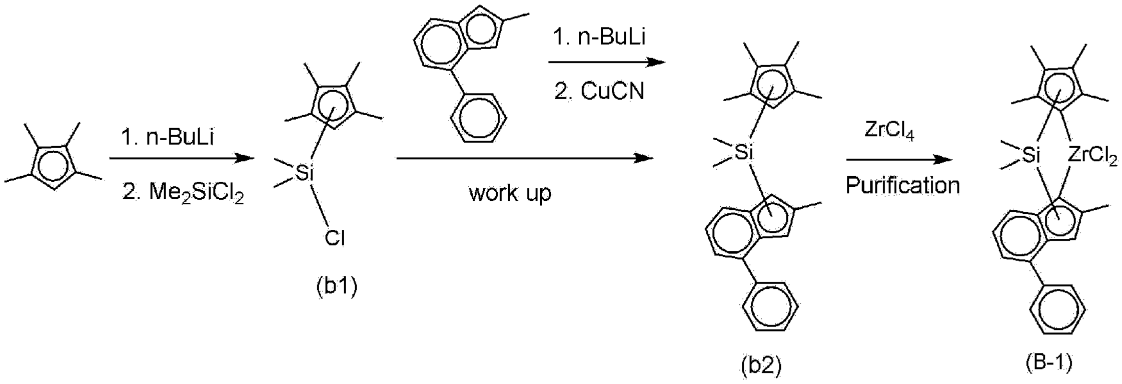


1 Equivalent weight of tetramethylcyclopentadiene (TMCP) was dissolved in THF (0.3 M), and to the prepared solution, n-BuLi (1.05 equivalent weights) was slowly added dropwise at -25°C, followed by stirring at room temperature for 3 hours. To the resulting reaction solution, $Me_2SiCl_2$ (1.05 equivalent weights) was introduced at -10°C, and stirred at room temperature overnight to prepare a mono-Si compound (b1)-containing solution.

In another stirrer, 2-methyl-4-phenyl-indene (1 equivalent weight) was dissolved in MTBE (0.3 M), and to the resulting solution, n-BuLi (1.05 equivalent weight) was slowly added dropwise at -25°C, followed by stirring at room temperature for 3 hours. To the resulting reaction solution, CuCN (2 mol%) was introduced, and stirred for 30 minutes, and the mono-Si compound (b1)-containing solution prepared above was introduced, and then stirred at room temperature overnight, followed by work-up with water and drying. Thus, a ligand (b2) was obtained.

The ligand (b2) was dissolved in toluene/ether (volume ratio of 2/1, 0.53 M), n-BuLi (2.05 equivalent weights) was added to the resulting solution at -25°C, and then stirred at room temperature for 5 hours to prepare a lithiated ligand.

A slurry which was prepared by mixing $ZrCl_4$ (1 equivalent weight) with toluene (0.17 M) in a separate flask was introduced to the lithiated ligand, and stirred at room temperature overnight. When the reaction was completed, the solvent was removed by drying under vacuum, DCM was introduced to the dry product, and LiCl was removed by filtration. The filtrate was dried under vacuum and recrystallized at room temperature by adding DCM and hexane. Thereafter, the produced solid was filtered and dried under vacuum to obtain a solid-phase transition metal compound (B-1).
$^1$H NMR (500MHz, $CDCl_3$, 7.26ppm): 1.12 (3H, s), 1.23 (3H, s), 1.88 (3H, s), 1.93 (3H, s), 1.99(3H, s), 2.06 (3H, s), 2.28 (3H, s), 7.02 (1H, s), 7.11 (1H, m), 7.29 (1H, d), 7.40 (1H, m), 7.46 (2H, t), 7.60 (1H, d), 7.68 (2H, d)

**Synthesis Example 8**

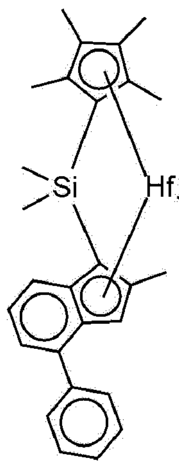

(B-2)

A transition metal compound (B-2) having the above structure was prepared in the same manner as in Synthesis Example 7, except that $HfCl_4$ was used instead of $ZrCl_4$.
$^1H$ NMR (500MHz, $CDCl_3$, 7.26ppm): 1.12 (3H, s), 1.23 (3H, s), 1.88 (3H, s), 1.93 (3H, s), 1.99(3H, s), 2.06 (3H, s), 2.28 (3H, s), 7.02 (1H, s), 7.11 (1H, m), 7.29 (1H, d), 7.40 (1H, m), 7.46 (2H, t), 7.60 (1H, d), 7.68 (2H, d)

**Synthesis Example 9**

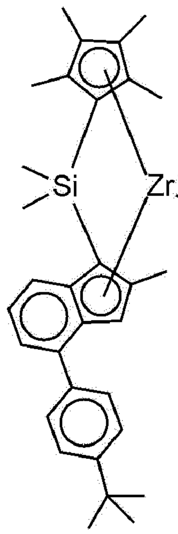

(B-3)

A transition metal compound (B-3) having the above structure was prepared in the same manner as in Synthesis Example 7, except that 2-methyl-4-(4-(t-butyl-phenyl)indene was used instead of 2-methyl-4-phenyl-indene.
$^1H$ NMR (500MHz, $CDCl_3$, 7.26ppm): 1.11 (9H, s), 1.22 (3H, s), 1.38 (9H, s), 1.88 (6H, d), 1.99(3H, s), 2.02 (3H, m), 2.33 (3H, s), 7.08 (1H, s), 7.12 (2H, m), 7.28 (2H, d), 7.58 (3H, d)

**Synthesis Example 10**

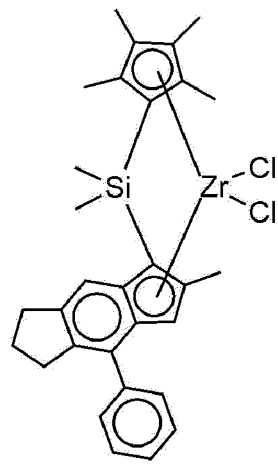

(B-4)

A transition metal compound (B-4) having the above structure was prepared in the same manner as in Synthesis Example 7, except that 2-methyl-4-phenyl-indene was used instead of 2-methyl-4-phenyl-indene.
$^1$H NMR (500MHz, $CDCl_3$, 7.26ppm): 0.98 (6H, s), 1.79 (9H, s), 1.94 (2H, m), 2.13 (6H, s), 2.83 (4H, m), 6.37 (1H, s), 7.45 (6H, m)

**Synthesis Example 11**

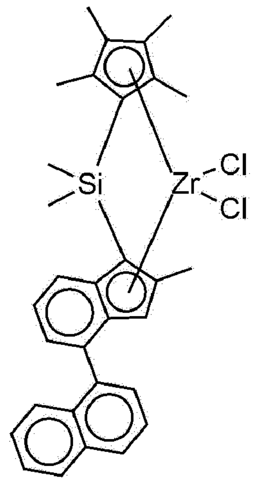

(B-5)

A transition metal compound (B-5) having the above structure was prepared in the same manner as in Synthesis Example 7, except that 2-methyl-4-naphthyl-indene was used instead of 2-methyl-4-phenyl-indene.
$^1$H NMR (500MHz, $CDCl_3$, 7.26ppm): 0.99 (6H, s), 1.78 (6H, s), 2.11 (6H, s), 2.16 (3H, s), 6.35 (1H, s), 6.83 (4H, m), 7.77 (1H, t), 8.07 (1H, m), 8.20 (1H, d), 8.28 (2H, m), 8.41 (1H, d).

**Synthesis Example 12**

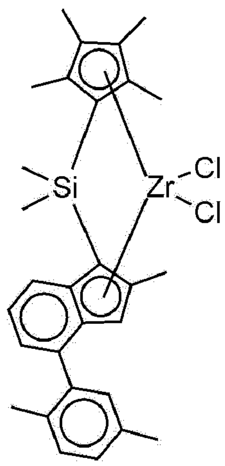

(B-6)

A transition metal compound (B-6) having the above structure was prepared in the same manner as in Synthesis Example 7, except that 2-methyl-4-(2,5-dimethyl-phenyl)indene was used instead of 2-methyl-4-phenyl-indene.
$^1H$ NMR (500MHz, $CDCl_3$, 7.26ppm): 0.96 (6H, s), 1.77 (6H, s), 2.18 (6H, m), 1.57 (3H, s), 1.79 (3H, s), 2.22 (3H, s), 6.89 (1H, s), 7.20 (1H, m), 7.36 (2H, m), 7.57(2H, m), 7.70 (1H, s)

**Synthesis Example 13**

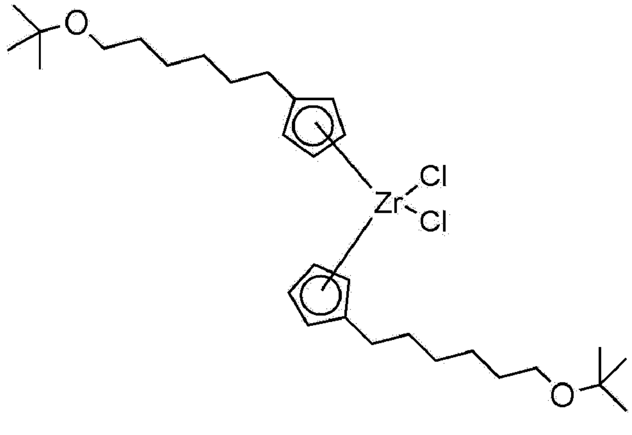

(C-1)

A transition metal compound (C-1) having the above structure was prepared in the same manner as in Comparative Synthesis Example 2 of Korean Patent Publication No. 10-2022-0067494.

**Synthesis Example 14**

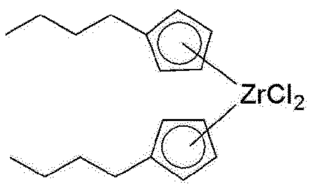

(C-2)

A transition metal compound (C-2) having the above structure was prepared in the same manner as in Comparative Synthesis Example 3 of Korean Patent Publication No. 10-2022-0067494.

**Synthesis Example 15**

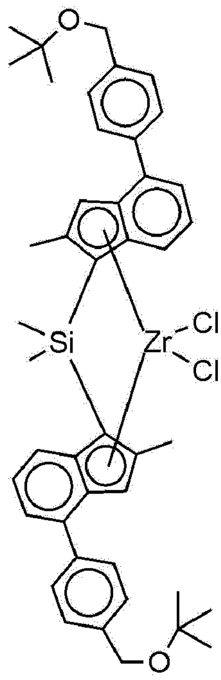

(C-3)

A transition metal compound (C-3) having the above structure was prepared in the same manner as in Synthesis Example 1 of Korean Patent Publication No. 10-2019-0074798.

**Synthesis Example 16**

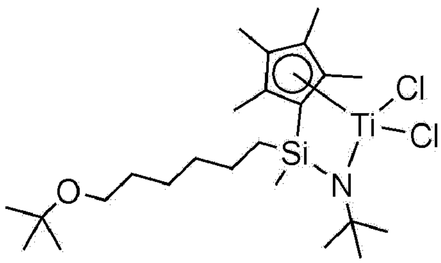

(C-4)

A transition metal compound (C-4) having the above structure was prepared in the same manner as in Preparation Example 1 of Korean Patent Publication No. 10-2016-0067508.

**Synthesis Example 17**

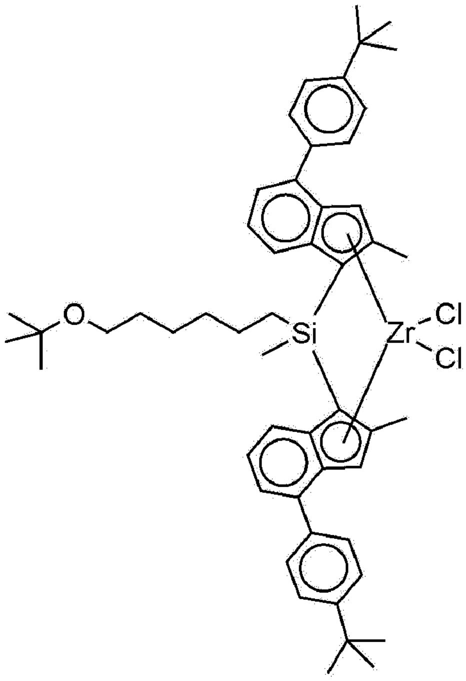

(C-5)

A transition metal compound (C-5) having the above structure was prepared in the same manner as in Example of Korean Patent Publication No. 10-2016-0045433.

**Synthesis Example 18**

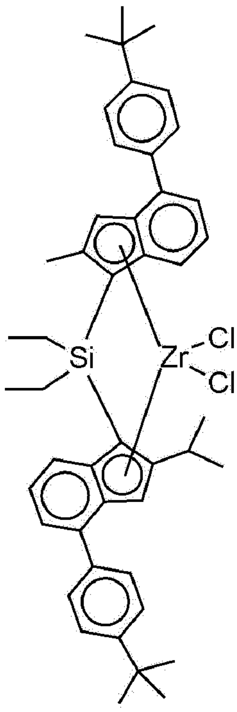

(C-6)

A transition metal compound (rac-C-6) having the above structure was prepared referring to Synthesis Example 1 of Korean Patent Publication No. 10-2018-0161297.

Preparation of (4-(4-(tert-butyl)phenyl)-2-isopropyl-1H-inden-1-yl)diethyl(2-methyl-4-phenyl-1H-inden-1-yl)silane

2-iPr-4-tBuPhIndene (1 equiv) was dissolved in toluene/THF (10/1, 0.5 M), and then n-BuLi (1.05 eq) was slowly added dropwise thereto at -25°C, followed by stirring at room temperature for 3 hours. Thereafter, dichloro diethyl silane (1.05 eq) was introduced at -10°C, followed by stirring at room temperature overnight. In another reactor, 2-Me-4-tBuPhIndene (1 eq) was dissolved in toluene/THF (5/1, 0.7 M), and then n-BuLi (1.05 eq) was slowly added dropwise thereto at -25°C, followed by stirring at room temperature for 3 hours. Thereafter, CuCN (2 mol%) was introduced, and stirred for 30 minutes, and then the first reactant mono-Si solution was introduced. Thereafter, stirring was performed at room temperature overnight, followed by work-up with water and drying, thereby obtaining a ligand.

Preparation of Rac-diethylsilanyl-(4-(4-tert-butylphenyl)phenyl)-2-methyl-1H-inden-1-yl)(4-(4-tert-butylphenyl)phenyl)-2-isoproyl-1H-inden-1-yl) zirconium dichloride

The ligand was dissolved in toluene/ether (2/1, 0.53 M), and then n-BuLi (2.05 eq) was introduced at -25°C, followed by stirring at room temperature for 5 hours. A slurry which was prepared by mixing $ZrCl_4$ (1 eq) with toluene (0.17 M) in a flask was introduced, and then stirred at room temperature overnight.

When the reaction was completed, the solvent was dried under vacuum, DCM was reintroduced, LiCl was removed through a filter, etc., and the filtrate was dried under vacuum.

The resulting dry product was completely dissolved using a minimum amount of toluene, then twice the corresponding volume of hexane was introduced, stirred for 30 minutes, and left at room temperature for 24 hours. The resulting solid was filtered and the filtrate was dried to obtain rac-diethylsilanyl-(4-(4-tert-butylphenyl)phenyl)-2-methyl-1H-inden-1-yl)(4-(4-tert-butylphenyl)phenyl)-2-isoproyl-1H-inden-1-yl) zirconium dichloride.

$^1H$ NMR (500MHz, $CDCl_3$, 7.26ppm): 1.09 (6H, dd), 1.30 (9H, s), 1.50 (4H, m), 1.90 (3H, m), 1.99 (3H, m), 2.12 (3H, s), 3.29 (1H, m), 7.00 (1H, s), 7.08 (1H, s), 7.13 (2H, m), 7.30 (2H, dd), 7.50 (2H, d), 7.61 (8H, m).

**<Preparation of Hybrid Metallocene Catalyst>**

**Preparation Example 1**

2.0 kg of toluene and 1000 g of silica (SP2410, manufactured by Grace Davision) were introduced into a 20 L sus high pressure reactor, and stirred while raising the reactor temperature to 40°C. 5.4 kg of methylaluminoxane (10 wt% in toluene, manufactured by Albemarle) was introduced into the reactor, and the temperature was raised to 70°C, followed by stirring at about 200 rpm for about 12 hours. Thereafter, the temperature of the reactor was lowered to 40°C, and stirring was stopped. The reaction product was allowed to settle for about 10 minutes, followed by decantation. 2.0 kg of toluene was added to the reaction product, and stirred for about 10 minutes, the stirring was stopped, and then the solution was allowed to settle for about 30 minutes, followed by decantation.

To the reactor, 2.0 kg of toluene was introduced, and subsequently, the compound (A-1) (52.5 mmol) prepared in Synthesis Example 1 as the first transition metal compound and the compound (B-1) (17.5 mmol) prepared in Synthesis Example 7 as the second transition metal compound, and 1000 mL of toluene were introduced. The temperature of the reactor was raised to 85 °C, followed by stirring for about 90 minutes.

Then, the temperature of the reactor was lowered to room temperature, and the stirring was stopped, and the reaction product was allowed to settle for about 30 minutes, followed by decantation of the reaction product. Subsequently, 3 kg of hexane was introduced into the reactor, and the hexane slurry solution was transferred to a 20 L filter dryer to filter the solution, and dried under reduced pressure at 50°C for about 4 hours to obtain 1.5 kg of a hybrid metallocene catalyst.

**Preparation Examples 2 to 17 and Comparative Preparation Examples 1 to 9**

Each hybrid metallocene catalyst was prepared in the same manner as in Preparation Example 1, except that the type and mixing molar ratio of the first and second transition metal compounds were changed as shown in Tables 1 and 2 below.

[Table 1]

| Catalyst | First transition metal compound | Second transition metal compound | Input amounts of first/second transition metal compounds (mmol) |
|---|---|---|---|
| Preparation Example 1 | A-1 | B-1 | 52.5/17.5 |

(continued)

| Catalyst | First transition metal compound | Second transition metal compound | Input amounts of first/second transition metal compounds (mmol) |
|---|---|---|---|
| Preparation Example 2 | A-1 | B-2 | 52.5/17.5 |
| Preparation Example 3 | A-1 | B-3 | 52.5/17.5 |
| Preparation Example 4 | A-1 | B-4 | 52.5/17.5 |
| Preparation Example 5 | A-1 | B-5 | 52.5/17.5 |
| Preparation Example 6 | A-1 | B-6 | 52.5/17.5 |
| Preparation Example 7 | A-2 | B-1 | 52.5/17.5 |
| Preparation Example 8 | A-2 | B-2 | 52.5/17.5 |
| Preparation Example 9 | A-2 | B-3 | 52.5/17.5 |
| Preparation Example 10 | A-2 | B-4 | 52.5/17.5 |
| Preparation Example 11 | A-2 | B-5 | 52.5/17.5 |
| Preparation Example 12 | A-2 | B-6 | 52.5/17.5 |
| Preparation Example 13 | A-3 | B-1 | 52.5/17.5 |
| Preparation Example 14 | A-3 | B-2 | 52.5/17.5 |
| Preparation Example 15 | A-4 | B-1 | 52.5/17.5 |
| Preparation Example 16 | A-5 | B-1 | 52.5/17.5 |
| Preparation Example 17 | A-6 | B-1 | 52.5/17.5 |

[Table 2]

| Catalyst | First transition metal compound | Second transition metal compound | Input amounts of first/ second transition metal compounds (mmol) |
|---|---|---|---|
| Comparative Preparation Example 1 | A-2 | C-1 | 52.5/17.5 |
| Comparative Preparation Example 2 | A-2 | C-2 | 52.5/17.5 |
| Comparative Preparation Example 3 | A-2 | C-3 | 52.5/17.5 |
| Comparative Preparation Example 4 | A-2 | C-4 | 52.5/17.5 |
| Comparative Preparation Example 5 | C-1 | B-1 | 17.5/52.5 |
| Comparative Preparation Example 6 | C-2 | B-1 | 17.5/52.5 |
| Comparative Preparation Example 7 | C-1 | B-3 | 17.5/52.5 |
| Comparative Preparation Example 8 | C-5 | B-1 | 52.5/17.5 |
| Comparative Preparation Example 9 | C-6 | B-1 | 52.5/17.5 |

**<Preparation of Polyethylene>**

**Examples 1 to 17 and Comparative Examples 1 to 9**

As a polymerization reactor, a 140 L continuous polymerization reactor operated at a reaction flow rate of about 7 m/s was prepared, in which an isobutene slurry loop process is possible. Further, in the reactor, reactants required for polyethylene polymerization as described in Tables 3 and 4 were continuously introduced. As the catalyst used for each polymerization reaction, those prepared in Preparation Examples or Comparative Preparation Examples as described in Tables 1 and 2 were used, and the catalyst was introduced after mixing with isobutene slurry. The polymerization reaction was conducted at a pressure of about 40 bar and a temperature of about 85°C.

Other main conditions of the polymerization reaction were described in Tables 3 and 4 below.

[Table 3]

| | Catalyst | Input amount of ethylene (kg/hr) | Input amount of 1-hexene[1] (wt%) | Input amount of hydrogen[2] (ppm) | Activity (kgPE/ $kgSiO_2$· hr) |
|---|---|---|---|---|---|
| Example 1 | Preparation Example 1 | 20.1 | 9.7 | 40 | 0.9 |
| Example 2 | Preparation Example 2 | 20.1 | 14.6 | 35 | 4.9 |
| Example 3 | Preparation Example 3 | 23.4 | 7.6 | 29 | 7.7 |
| Example 4 | Preparation Example 4 | 24.0 | 14.0 | 10 | 5.1 |
| Example 5 | Preparation Example 5 | 19.8 | 14.8 | 13 | 4.1 |
| Example 6 | Preparation Example 6 | 19.8 | 12.0 | 10 | 4.2 |
| Example 7 | Preparation Example 7 | 19.3 | 14.0 | 28 | 1.4 |
| Example 8 | Preparation Example 8 | 28.1 | 14.2 | 15 | 1.9 |
| Example 9 | Preparation Example 9 | 24.2 | 5.6 | 10 | 4.7 |
| Example 10 | Preparation Example 10 | 20.2 | 10.9 | 30 | 3.2 |
| Example 11 | Preparation Example 11 | 22.0 | 13.4 | 7 | 2.1 |
| Example 12 | Preparation Example 12 | 20.0 | 11.5 | 10 | 3.2 |
| Example 13 | Preparation Example 13 | 23.7 | 7.3 | 10 | 8.3 |
| Example 14 | Preparation Example 14 | 24.6 | 6.1 | 16 | 7.4 |
| Example 15 | Preparation Example 15 | 21.1 | 9.5 | 16 | 1.8 |
| Example 16 | Preparation Example 16 | 20.1 | 14.6 | 24 | 4.9 |
| Example 17 | Preparation Example 17 | 20.0 | 8.3 | 30 | 2.0 |

[Table 4]

| | Catalyst | Input amount of ethylene (kg/hr) | Input amount of 1-hexene[1] (wt%) | Input amount of hydrogen[2] (ppm) | Activity (kgPE/ $kgSiO_2$·hr) |
|---|---|---|---|---|---|
| Comparative Example 1 | Comparative Preparation Example 1 | 20.1 | 10.9 | 7 | 2.4 |
| Comparative Example 2 | Comparative Preparation Example 2 | 17.8 | 14.2 | 11 | 3.7 |
| Comparative Example 3 | Comparative Preparation Example 3 | 20.2 | 13.5 | 11 | 4.0 |
| Comparative Example 4 | Comparative Preparation Example 4 | 20.1 | 12.0 | 4 | 2.0 |
| Comparative Example 5 | Comparative Preparation Example 5 | 23.0 | 11.0 | 17 | 4.5 |

(continued)

| | Catalyst | Input amount of ethylene (kg/hr) | Input amount of 1-hexene[1] (wt%) | Input amount of hydrogen[2] (ppm) | Activity (kgPE/ $kgSiO_2 \cdot hr$) |
|---|---|---|---|---|---|
| Comparative Example 6 | Comparative Preparation Example 6 | 24.5 | 12.5 | 20 | 3.2 |
| Comparative Example 7 | Comparative Preparation Example 7 | 20.3 | 14.0 | 14 | 3.9 |
| Comparative Example 8 | Comparative Preparation Example 8 | 20.0 | 13.5 | 9 | 4.8 |
| Comparative Example 9 | Comparative Preparation Example 9 | 24.0 | 13.0 | 0 | 4.4 |

In Tables 3 and 4, activity ($kgPE/kgSiO_2 \cdot hr$) was calculated as a ratio of the weight (kg PE) of the produced polymer per weight (kg) of the supported catalyst used based on unit time (hr).
Further, the input amount (wt%) of 1-hexene is calculated as a percentage of the input of 1-hexene, based on the total weight of monomers including ethylene and 1-hexene, and the input amount (ppm) of hydrogen is based on the total weight of monomers including ethylene and 1-hexene.

**Experimental Example**

The physical properties of the polyethylenes prepared in Examples and Comparative Examples were measured as follows, and the results are shown in Tables 5 and 6, respectively.

(1) Density: measured according to the ASTM D1505 standard.

(2) Melt Index ($MI_{2.16}$): measured according to the ASTM D1238 (Condition E, 190°C, 2.16 kg load) standard.

(3) BOCF

A cross fraction chromatography (CFC) analysis was performed on the polyethylenes prepared in Examples and Comparative Examples by the following method, and from the results, broad orthogonal crystalline fraction (BOCF) index was calculated.

[Cross fraction chromatography (CFC) measurement conditions (including TREF and GPC analysis)]

- Analysis equipment: Polymer Char CFC - 7890B (G3440D)
  (Detector: Integrated Detector IR5 MCT)
- Sample preparation and injection: 32 mg of the polyolefin prepared in Examples or Comparative Examples was put into a 10 mL vial and placed in an autosampler, 8 mL of 1,2,4-trichlorobenzene (TCB) was introduced, and dissolved at 160°C for 90 minutes, and stabilized at 140°C for 20 minutes. After nitrogen purging, the sample was extracted and loaded onto a temperature rising elution fractionation column (TREF column).
- Crystallization: the temperature of the sample previously loaded in the TREF column was set at 140°C, and cooled from 140°C to 35°C at a rate of 0.5 °C/min and maintained for 15 minutes.

The detailed conditions for stabilization and crystallization are as follows:

| Heating / Cooling rate | |
|---|---|
| Stabilization rate | 40 °C/min |
| Stabilization temperature | 140 °C |
| Stabilization time | 20 min |
| Crystallization cooling rate | 0.5 °C/min |
| Crystallization temperature | 35 °C |
| Crystallization time | 15 min |

- Temperature rising elution fractionation (TREF) analysis: The sample previously crystallized was heated from 35°C to 120°C at a rate of 1°C/min until the fraction temperature below, then fixed, and the concentrations of the fractions eluted at that temperature for 5 minutes were measured. The TREF curve was derived from the results of measuring the concentrations.

From the TREF curve, a content ratio of a soluble fraction (SF(<35°C)) eluted in a region of an elution temperature of lower than 35°C, a content ratio of a fraction eluted in a region of an elution temperature of 35°C or higher and lower than 55°C, a content ratio of a fraction eluted in a region of an elution temperature of 55°C or higher and 75°C or lower, and a content ratio (>75°C) of a fraction eluted in a region of an elution temperature of higher than 75°C were calculated (wt%), respectively.

Further, from the TREF curve, a content ratio ($W_L$) of a low crystalline polymer which is eluted in a region of an elution temperature of 75°C or lower, excluding SF, and a content ratio ($W_H$) of a highly crystalline polymer which is eluted in a region of an elution temperature of higher than 75°C were calculated (wt%), respectively.

Further, the elution temperature ($Te_L$) of the lowest peak and the elution temperature (Ten) of the highest peak in the TREF curve were identified.

<Fraction temperature>

35°C/40°C/43°C/46°C/49°C/52°C/55°C/58°C/61°C/64°C/67°C/70°C/73°C/76°C/79°C/8 2°C/85°C/88°C/91°C/94°C/97°C/100°C/105°C/120°C

<Measurement conditions>

| **Fraction elution condition** | |
|---|---|
| Elution time | 5 min |
| Analysis time | 15 min |
| Temperature rate (Heating) | 20 °C/min |
| Redissolution time | 5 min |
| **Cleaning condition** | |
| Temperature heating rate | 20 °C/min |
| Cleaning temperature | 150 °C |
| Cleaning time | 30 min |
| **Solvent control condition** | |
| Analysis pump rate | 1 mL/min |
| Cleaning TREF column Flow rate | 1 mL/min |
| Pump stabilization time | 30 min |
| Sample pick up flow rate | 3 mL/min |

(continued)

| Solvent control condition | |
|---|---|
| Sample pick up volume | 2.6 mL/min |
| Load loop flow rate | 1.25 mL/min |
| Load loop flow volume | 1.6 mL |
| Clean line flow rate | 4 mL/min |
| Clean line volume | 5 mL |
| Clean filter flow rate | 4 mL/min |
| Clean filter volume | 10 mL |
| Clean transfer line flow rate | 5 mL/min |
| Clean transfer line volume | 2.5 mL |
| Load TREF column flow rate | 0.2 mL/min |
| Load TREF at X mL from beginning | 1.0 mL |
| Solvent pick up flow rate | 15 mL/min |
| Vial filling flow rate | 5 mL/min |
| Delay volume | 9 mL |
| Acquisition volume | 18 mL |

- GPC analysis: the fractions eluted at each temperature in the previous TREF analysis were transferred to a GPC column of a GPC device (PL-GPC220), and then the molecular weights of the eluted molecules were measured according to the following measurement conditions.

Further, from the measurement results, a weight average molecular weight ($M_L$) of the low-crystalline polymer eluted in the region of 75°C or lower, excluding SF, in the TREF curve, and a weight average molecular weight ($M_H$) of the highly crystalline polymer eluted in the region of the elution temperature of higher than 75°C were calculated, respectively.

<Measurement conditions>

| GPC related condition | |
|---|---|
| CFC load column rate | 0.2 mL/min |
| CFC sample loaded x mL from col start | 1 mL |
| CFC solvent pick up rate | 15 mL/min |
| CFC vial filling rate | 8 mL/min |
| CFC pump stabilization time | 30 min |
| CFC elution time | 5 min |
| CFC delay volume | 0 |
| CFC acquisition volume | 40 mL |
| CFC analysis pump flow | 1 mL/min |
| CFC pick up sample rate | 3 mL/min |
| CFC pick up sample volume | 2.6 mL |
| CFC load loop rate | 1.25 mL/min |

(continued)

| GPC related condition | |
|---|---|
| CFC load loop volume | 1.6 mL |
| CFC clean line rate | 5 mL/min |
| CFC clean line volume | 2 mL |
| CFC clean filter rate | 5 mL/min |
| CFC clean filter volume | 5 mL |
| CFC clean Tr line rate | 5 mL/min |
| CFC clean Tr line volume | 2 mL/min |

Based on the analysis results, broad orthogonal crystalline fraction (BOCF) index was calculated according to Equation 1 below:

[Equation 1]

$$\text{BOCF index} = \{\text{Sum of regions}/188.5560176\} + \{1/297.9631479\}$$

in Equation 1, the sum of regions is calculated through the steps of obtaining a contour plot of the contents of fractions according to an elution temperature (Te) and a weight average molecular weight (Log M) from CFC analysis of the polyethylene; deriving a coefficient map of the sum of regions by arbitrarily dividing the fractions according to Te and Log M into a plurality of regions, and assigning an arbitrary coefficient to each region according to the contribution of the fractions to the dart drop impact strength; obtaining the actual element value for each region by substituting the coefficient map of the sum of regions into the contour plot and calculating the area of a signal for each region; and calculating the sum of regions by multiplying the actual element value for each region by the coefficient value assigned above for each region to obtain the sum.

Specifically, in the present Experimental Example, the sum of regions was calculated by the following method.

First, through the CFC analysis of polyethylene, the contents of the fractions according to an elution temperature (Te) and a weight average molecular weight (log M) is obtained as the contour plot. FIG. 1 shows a contour plot of the polyethylene of Example 1. In FIG. 1, and FIGS. 2 and 3 presented below, among the CFC analysis results, only Te(°C) from 30 to 110 and Log M from 3.0 to 6.5 are presented.

Next, the fractions were divided into 13 regions according to Te and Log M, and a coefficient of 60, 40, 40, 40, 30, 0, 0, 0, 0, -10, -10, -25, and 20 was arbitrarily assigned to each region according to the contribution of the fractions to the dart drop impact strength to derive a coefficient map of the sum of regions. FIG. 2 shows a coefficient map of the sum of regions of the polyethylene of Example 1.

Low crystalline-high molecular weight (LCHW) region: corresponding to Te (°C) of 35~52 and Log M(=n/10) of 55/10-80/10:

Medium crystalline-high molecular weight (MCHW) region: corresponding to Te (°C) of 53-74 and Log M(=n/10) of 55/10-80/10;
High crystalline-high molecular weight (HCHW) region: corresponding to Te (°C) of 75-93 and Log M(=n/10) of 55/10-80/10;
Low crystalline-medium molecular weight (LCMW) region: corresponding to Te (°C) of 35~52 and Log M(=n/10) of 45/10-54/10;
Medium crystalline-medium molecular weight (MCMW) region: corresponding to Te (°C) of 53-74 and Log M(=n/10) of 45/10-54/10;
High crystalline-medium molecular weight (HCMW) region: corresponding to Te (°C) of 75-93 and Log M(=n/10) of 45/10-54/10;
Low crystalline-low molecular weight (LCLW) region: corresponding to Te (°C) of 35~52 and Log M(=n/10) of 35/10-44/10;
Medium crystalline-low molecular weight (MCLW) region: corresponding to Te (°C) of 53-74 and Log M(=n/10) of 35/10-44/10;
High crystalline-low molecular weight (HCLW) region: corresponding to Te (°C) of 75~93 and Log M(=n/10) of

35/10-44/10;
Low molecular weight (LW) region: corresponding to Te (°C) of 30-93 and Log M(=n/10) of 20/10-34/10;
High crystalline (HC) region: corresponding to Te (°C) of 94~120 and Log M(=n/10) of 35/10-80/10;
High crystalline&low molecular weight (HC&LW) region: corresponding to Te (°C) of 94~120 and Log M(=n/10) of 20/10-34/10; and
Soluble fraction (SF) region: corresponding to Te (°C) of 30-34 and Log M(=n/10) of 35/10-80/10.

Next, the coefficient map of the sum of regions was substituted into the contour plot, and the actual element value for each region, i.e., the area of a signal for each region was calculated using a sigma equation of Equation 2 below:

[Equation 2]

$$\text{Actual element value for each region} = \sum_{Te} \sum_{n} \text{CFC (Te, n/10)}$$

in Equation 2, Te represents an elution temperature, n=10 x log M, wherein M represents a weight average molecular weight (g/mol).

With regard to Example 1, FIG. 2 was substituted into FIG. 1, and the actual element value for each region was calculated as in Equation below:

$$\text{LCHW} = \sum_{Te=35}^{52} \sum_{n=55}^{80} CFC\left(Te, \frac{n}{10}\right)$$

$$\text{LCMW} = \sum_{Te=35}^{52} \sum_{n=45}^{54} CFC\left(Te, \frac{n}{10}\right)$$

$$\text{MCHW} = \sum_{Te=53}^{74} \sum_{n=55}^{80} CFC\left(Te, \frac{n}{10}\right)$$

$$\text{MCMW} = \sum_{Te=53}^{74} \sum_{n=45}^{54} CFC\left(Te, \frac{n}{10}\right)$$

$$\text{HCHW} = \sum_{Te=75}^{93} \sum_{n=55}^{80} CFC\left(Te, \frac{n}{10}\right)$$

$$\text{SF} = \sum_{Te=30}^{34} \sum_{n=35}^{80} CFC\left(Te, \frac{n}{10}\right)$$

$$\mathrm{HC} = \sum_{Te=94}^{120} \sum_{n=35}^{80} CFC\left(Te, \frac{n}{10}\right)$$

$$\mathrm{LW} = \sum_{Te=30}^{93} \sum_{n=20}^{34} CFC\left(Te, \frac{n}{10}\right)$$

$$\mathrm{HC\&LW} = \sum_{Te=94}^{120} \sum_{n=20}^{34} CFC\left(Te, \frac{n}{10}\right)$$

Equations for calculating the actual element value in the HCMW region, LCLW region, MCLW region, and HCLW region, where 0 was assigned as the coefficient value for each region, were omitted.

Next, the actual element value for each region calculated above was multiplied by the coefficient value assigned above for each region to obtain the sum, thereby calculating the sum of regions.

In the case of the polyethylene of Example 1, the sum of regions was calculated as in Equation 3 below.

Sum of regions = (LCHW × 60) + (MCHW × 40) + (HCHW × 40) + (LCMW × 40) + (MCMW × 30) + (HCMW × 0) + (LCLW × 0) + (MCLW × 0) + ((HCLW × 0) + (LW × (-10)) + (HC × (-10)) + (HC&LW × (-25)) + (SF × 20) [Equation 3]

in Equation 3, LCHW, MCHW, HCHW, LCMW, MCMW, HCMW, LCLW, MCLW, HCLW, LW, HC, HC&LW, and SF represent actual element values of the LCHW region, MCHW region, HCHW region, LCMW region, MCMW region, HCMW region, LCLW region, MCLW region, HCLW region, LW region, HC region, HC&LW region and SF region calculated above, respectively.

For example, in the case of the MCHW region in the polyethylene of Example 1, the area of a signal corresponding to Te(°C) of 53-74 and Log M(=n/10) of 55/10-80/10 was calculated using the sigma equation above, which was taken as the actual element value of the MCHW region and multiplied by 40 which is the coefficient value of the MCHW region assigned above. The resulting value was 45.85726. Those for other regions were also calculated in the same manner as above. The results are shown in FIG 3. FIG. 3 is a map showing the result of multiplying the actual element value for each region calculated from the results of CFC analysis of the polyethylene of Example 1 by the coefficient value for each region.

Next, the sum of regions calculated using the above method was substituted into Equation 1 to calculate the BOCF index value.

**(4) Production of Film**

Based on the total weight of the polyethylene prepared in Examples or Comparative Examples, 1500 ppm of antioxidant (a weight ratio of Songnox 1076 (Songwon):Songnox 1680(Songwon)= 1:2) and 300 ppm of 3M Dynamar Polymer Processing Additive FX5929 were introduced and mixed, and then extruded using a twin-screw extruder (TEK 30 MHS, manufactured by SMPLATECH CO., diameter of 32 pi, L/D=40) at an extrusion temperature of 190°C and an extrusion rate of 35 kg/hr to prepare approximately 18 kg of a pellet-like composition for producing a film.

The composition for producing a film prepared as above was inflation-molded under the following film extrusion conditions to produce a film.

<Film molding conditions>

Single Screw Extruder (YOOJIN ENGINEERING, Blown Film M/C, 50 pi, L/D=32)
Melt temperature (or extrusion temperature): 180°C
Die Gap: 2.0 mm
Die diameter: 120 mm

Blown-Up Ratio: 2.5
Frost Line Height: maintained at 200 mm to 250 mm
Sample extrusion amount: 300 g/min to 500 g/min
Cooling: dual air-ring was used
Film thickness: 50 $\mu$m

**(5) Dart drop impact strength**

For each of the polyethylene films of Examples and Comparative Examples as produced in (4), the dart drop impact strength was measured according to the ASTM D1709 [Method A] standard, which was repeated 20 or more times for each film sample, and then the average value was taken.

**(6) Index value error (expDI and error)**

A relationship graph between BOCF index and dart drop impact strength, in which the BOCF index (BOCF) was put on the x-axis and the dart drop impact strength was put on the y-axis, was derived using the BOCF index and dart drop impact strength of the polyethylenes according to Examples and Comparative Examples, which were measured above, and shown in FIG. 4.

In the relationship graph between the BOCF index and dart drop impact strength in FIG. 4, the functional formula for the trend line, y = 1773.5 x + 23.537, was obtained, and the arithmetic value obtained by substituting the calculated BOCF index value into x in the functional formula was expressed as expDI.

In addition, the error rate (error%) of the actual value of the dart drop impact strength measured in (5) and expDI calculated above was calculated according to Equation 4 below.

[Equation 4]

$$\text{Error rate (error\%)} = |(\text{Actual value of dart drop impact strength} / \text{expDI}) \times 100 - 100|$$

[Table 5]

| | Physical properties of resin | | | Mechanical properties | Index value error | |
|---|---|---|---|---|---|---|
| | Density (g/cm$^3$) | $MI_{2.16}$ (g/10min) | BOCF index | Dart drop impact strength (gf) | expDI | error% |
| Example 1 | 0.9201 | 0.47 | 1.1083 | 1937 | 1989 | 2.62 |
| Example 2 | 0.9179 | 0.56 | 1.0832 | 1901 | 1945 | 2.24 |
| Example 3 | 0.9134 | 0.46 | 1.1728 | 2128 | 2103 | 1.16 |
| Example 4 | 0.9162 | 0.53 | 1.0325 | 1950 | 1855 | 5.14 |
| Example 5 | 0.9166 | 1.09 | 1.0253 | 1870 | 1842 | 1.52 |
| Example 6 | 0.9171 | 1.15 | 1.2951 | 2200 | 2320 | 5.19 |
| Example 7 | 0.9189 | 1.14 | 1.1261 | 2050 | 2021 | 1.45 |
| Example 8 | 0.9190 | 0.87 | 1.1006 | 1993 | 1975 | 0.89 |
| Example 9 | 0.9190 | 0.95 | 1.0450 | 1950 | 1877 | 3.90 |
| Example 10 | 0.9192 | 0.85 | 1.0908 | 1890 | 1958 | 3.48 |
| Example 11 | 0.9170 | 0.99 | 1.2321 | 2090 | 2209 | 5.37 |
| Example 12 | 0.9189 | 1.00 | 1.0671 | 2010 | 1916 | 4.90 |
| Example 13 | 0.9199 | 1.01 | 1.0284 | 1840 | 1847 | 0.40 |
| Example 14 | 0.9159 | 0.88 | 1.0070 | 1846 | 1809 | 2.02 |
| Example 15 | 0.9185 | 0.99 | 1.0212 | 1900 | 1835 | 3.56 |
| Example 16 | 0.9180 | 1.0 | 1.0930 | 1900 | 1962 | 3.16 |

(continued)

| | Physical properties of resin | | | Mechanical properties | Index value error | |
|---|---|---|---|---|---|---|
| | Density ($g/cm^3$) | $MI_{2.16}$ (g/10min) | BOCF index | Dart drop impact strength (gf) | expDI | error% |
| Example 17 | 0.9160 | 0.5 | 1.2651 | 2300 | 2267 | 1.45 |

[Table 6]

| | Physical properties of resin | | | Mechanical properties | Index value error | |
|---|---|---|---|---|---|---|
| | Density ($g/cm^3$) | $MI_{2.16}$ (g/ 10min) | BOCF index | Dart drop impact strength (gf) | expDI | error% |
| Comparative Example 1 | 0.9180 | 1.0 | 0.7292 | 1200 | 1317 | 8.87 |
| Comparative Example 2 | 0.9175 | 1.01 | 0.8926 | 1615 | 1607 | 0.53 |
| Comparative Example 3 | 0.9156 | 0.98 | 0.8965 | 1659 | 1613 | 2.82 |
| Comparative Example 4 | 0.9165 | 0.89 | 0.8989 | 1760 | 1618 | 8.79 |
| Comparative Example 5 | 0.9180 | 1.21 | 0.7170 | 1210 | 1295 | 6.58 |
| Comparative Example 6 | 0.9166 | 1.01 | 0.7101 | 1180 | 1283 | 9.57 |
| Comparative Example 7 | 0.9184 | 0.89 | 0.6321 | 1150 | 1144 | 3.10 |
| Comparative Example 8 | 0.9168 | 1.02 | 0.8714 | 1550 | 1569 | 5.16 |
| Comparative Example 9 | 0.9192 | 1.21 | 0.7493 | 1300 | 1353 | 0.92 |

The silane bridge bis indene (SBI) catalyst has two types of isomers: a racemate and a meso form. Generally, when a mixture of the racemate and the meso form of the SBI catalyst is used in polyethylene polymerization, a molecular weight distribution of the prepared polymer becomes broad and two melting points (Tm) appear. For this reason, the racemate and the meso form are usually used separately. In the case of the racemate, its molecular weight and activity are about twice as high as those of the meso form.

In the case of Examples, during polyethylene polymerization, the hybrid metallocene catalysts were used, each hybrid metallocene catalyst including the first transition metal compound (racemate) of Formula 1, which is a high-molecular-weight, highly copolymerizable catalyst, and the second transition metal compound of Formula 2, which is a low-molecular-weight, low copolymerizable catalyst, and therefore, the prepared polyethylenes showed the high dart drop impact strength.

In contrast, in the case of Comparative Examples 1 to 3, the prepared polyethylenes showed the low dart drop impact strength because the combination of the high-molecular-weight catalyst and the low-molecular-weight catalyst was unsuitable in terms of the molecular structure.

In the case of Comparative Example 4, the prepared polyethylene showed the low dart drop impact strength due to the use of the hybrid metallocene catalyst including only two types of high-molecular-weight catalysts, and in the case of Comparative Examples 5 to 7, the prepared polyethylene showed the low dart drop impact strength due to the use of the hybrid metallocene catalyst including only two types of low-molecular-weight catalysts.

Further, in the case of Comparative Example 8, since C-5, which is a high-molecular-weight catalyst, had weaker high molecular weight expression, as compared to Examples, the prepared polyethylene showed the low dart drop impact strength.

Further, in the case of Comparative Example 9, since C-6, which is a high-molecular-weight catalyst, did not include tether, the loading efficiency was reduced, and as a result, the high molecular weight expression was weakened. This indicates that even though hydrogen was not introduced, the density of polyethylene was at the equivalent level, but the MI thereof was greatly increased.

## Claims

**1.** A hybrid metallocene catalyst comprising

a first transition metal compound represented by the following Formula 1; and
a second transition metal compound represented by the following Formula 2:

[Formula 1]

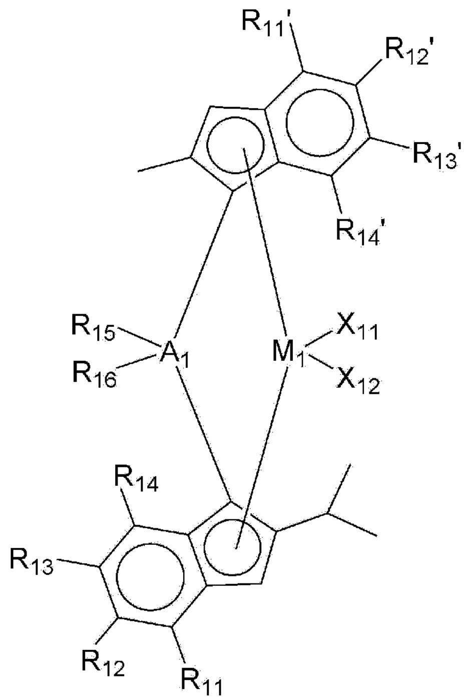

in Formula 1,
$M_1$ is a Group 4 transition metal,
$A_1$ is C, Si, or Ge,
$R_{11}$ and $R_{11}'$ are each independently $C_{6-20}$ aryl, $C_{7-20}$ alkylaryl, $C_{7-20}$ arylalkyl, or $C_{7-20}$ alkoxyaryl,
$R_{12}$, $R_{13}$, $R_{14}$, $R_{12}'$, $R_{13}'$, and $R_{14}'$ are each independently hydrogen, halogen, $C_{1-20}$ alkyl, $C_{1-20}$ alkenyl, $C_{1-20}$ alkoxy, $C_{6-20}$ aryl, $C_{7-20}$ alkylaryl, or $C_{7-20}$ arylalkyl,
one of $R_{15}$ and $R_{16}$ is $C_{2-20}$ alkoxyalkyl, and the other is $C_{1-20}$ alkyl, and
$X_{11}$ and $X_{12}$ are each independently halogen or $C_{1-20}$ alkyl,

[Formula 2]

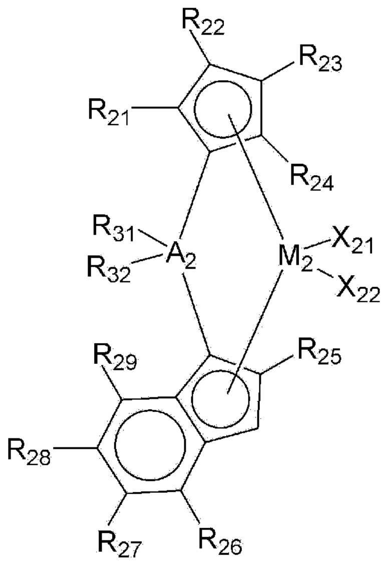

in Formula 2,
$M_2$ is a Group 4 transition metal,
$A_2$ is C, Si, or Ge,
$R_{21}$ to $R_{24}$ are each independently $C_{1-20}$ alkyl,
$R_{25}$ is $C_{1-20}$ alkyl,
$R_{26}$ is $C_{6-20}$ aryl unsubstituted or substituted with $C_{1-20}$ alkyl,
$R_{27}$ to $R_{29}$ are each independently any one of hydrogen, $C_{1-20}$ alkyl, $C_{2-20}$ alkenyl, $C_{6-20}$ aryl, $C_{7-20}$ alkylaryl, and $C_{7-20}$ arylalkyl, or two adjacent groups of $R_{27}$ to $R_{29}$ are linked to each other to form a $C_{4-8}$ aliphatic ring,
$R_{31}$ and $R_{32}$ are each independently $C_{1-20}$ alkyl, and
$X_{21}$ and $X_{22}$ are each independently halogen or $C_{1-20}$ alkyl.

**2.** The hybrid metallocene catalyst of claim 1, wherein the first transition metal compound is a compound in which, in Formula 1,

$M_1$ is Ti, Zr, or Hf,
$A_1$ is Si,
$R_{11}$ and $R_{11}$' are each independently $C_{6-12}$ aryl, $C_{7-18}$ alkylaryl, or $C_{7-18}$ alkoxyaryl,
$R_{12}$, $R_{13}$, $R_{14}$, $R_{12}$', $R_{13}$', and $R_{14}$' are each hydrogen,
one of $R_{15}$ and $R_{16}$ is $C_{2-12}$ alkoxyalkyl, and the other is $C_{1-8}$ alkyl, and
$X_{11}$ and $X_{12}$ are each independently chloro or methyl.

**3.** The hybrid metallocene catalyst of claim 1, wherein the first transition metal compound is a compound in which, in Formula 1,

$M_1$ is Zr,
$A_1$ is Si,
$R_{11}$ and $R_{11}$' are each independently phenyl, naphthyl, t-butylphenyl, 3,5-di-t-butylphenyl, 2,5-dimethylphenyl, or methoxyphenyl,
$R_{12}$, $R_{13}$, $R_{14}$, $R_{12}$', $R_{13}$', and $R_{14}$' are each independently hydrogen,
one of $R_{15}$ and $R_{16}$ is t-butoxyhexyl, and the other is methyl, and
$X_{11}$ and $X_{12}$ are each independently chloro.

**4.** The hybrid metallocene catalyst of claim 1, wherein the first transition metal compound is any one selected from the group consisting of the following compounds:

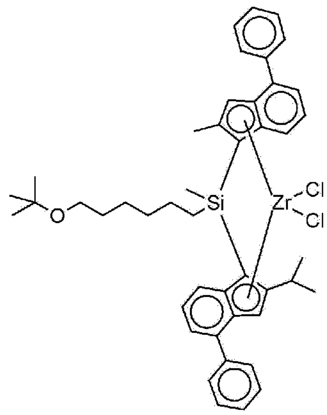
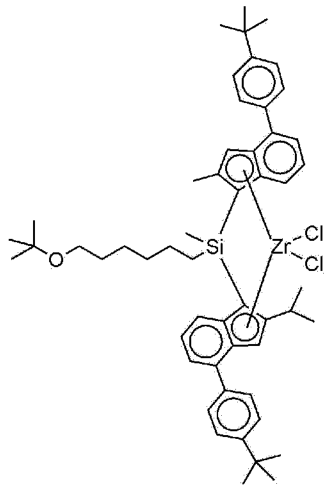
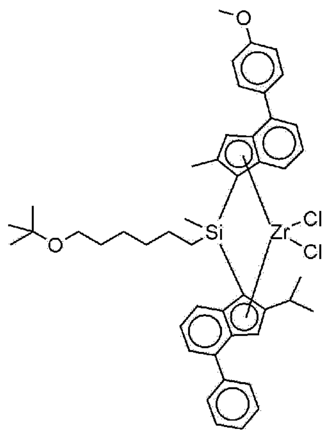

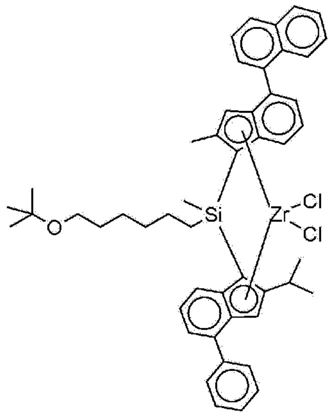
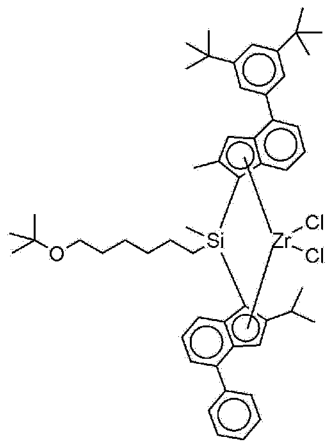
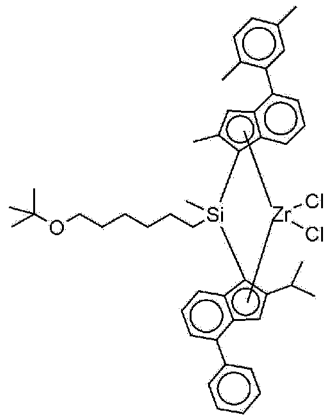

**5.** The hybrid metallocene catalyst of claim 1, wherein the second transition metal compound is a compound in which, in Formula 2,

$M_2$ is Ti, Zr, or Hf,
$A_2$ is Si,
$R_{21}$ to $R_{24}$ are each independently $C_{1-8}$ alkyl,
$R_{25}$ is $C_{1-8}$ alkyl,
$R_{26}$ is $C_{6-18}$ aryl unsubstituted or substituted with $C_{1-8}$ alkyl,
$R_{27}$ to $R_{29}$ are each independently hydrogen, or two adjacent groups of $R_{27}$ to $R_{29}$ are linked to each other to form a $C_{4-8}$ aliphatic ring,
$R_{31}$ and $R_{32}$ are each independently $C_{1-8}$ alkyl, and
$X_{31}$ and $X_{32}$ are each independently chloro or methyl.

**6.** The hybrid metallocene catalyst of claim 1, wherein the second transition metal compound is a compound in which, in Formula 2,

$M_2$ is Zr or Hf,
$A_2$ is Si,
$R_{21}$ to $R_{24}$ are each methyl,
$R_{25}$ is methyl,
$R_{26}$ is phenyl, t-butylphenyl, naphthyl, or 2,5-dimethylphenyl,
$R_{27}$ to $R_{29}$ are each independently hydrogen, or two adjacent groups of $R_{27}$ to $R_{29}$ are linked to each other to form a cyclopentane ring,
$R_{31}$ and $R_{32}$ are each independently methyl, and
$X_{31}$ and $X_{32}$ are each independently chloro.

7. The hybrid metallocene catalyst of claim 1, wherein the second transition metal compound is any one selected from the group consisting of the following compounds:

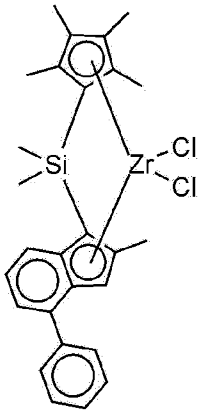

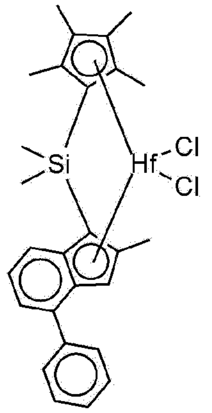

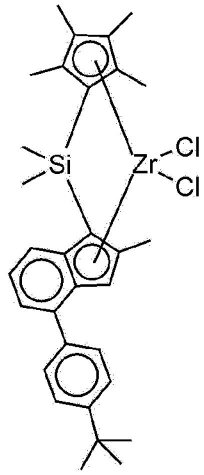

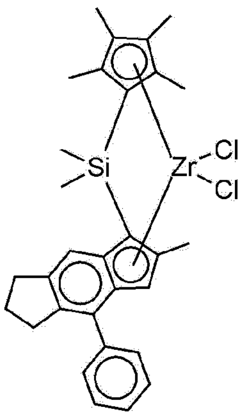

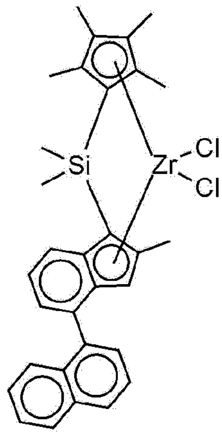

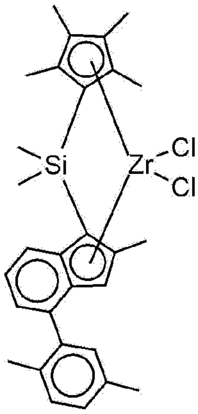
.

8. The hybrid metallocene catalyst of claim 1, wherein the first transition metal compound and the second transition metal compound are included at a molar ratio of 1:6 to 6:1.

9. The hybrid metallocene catalyst of claim 1, further comprising one or more of a cocatalyst and a support.

10. The hybrid metallocene catalyst of claim 9, wherein the cocatalyst is one or more selected from the group consisting of compounds represented by the following Formula 3:

[Formula 3] $-[Al(R_{41})-O]_a-$

in Formula 3,

$R_{41}$ is halogen; or $C_{1-20}$ hydrocarbyl unsubstituted or substituted with halogen; and
a is an integer of 2 or more.

11. The hybrid metallocene catalyst of claim 9, wherein the support comprises silica, alumina, magnesia, or a mixture thereof.

12. A method of preparing a polyethylene, the method comprising the step of performing slurry polymerization of an ethylene monomer and an olefin monomer while introducing hydrogen in the presence of the hybrid metallocene catalyst of claim 1.

**13.** The method of claim 12, wherein the hydrogen is introduced in an amount of 5 ppm to 45 ppm, based on a total weight of monomers including the ethylene monomer and the olefin monomer, during the polymerization.

**14.** The method of claim 12, wherein the olefin monomer is introduced in an amount of 4% by weight to 15% by weight, based on a total weight of monomers including the ethylene monomer and the olefin monomer.

**15.** The method of claim 12, wherein the olefin monomer is 1-hexene.

**16.** The method of claim 12, wherein the polyethylene satisfies the following requirements of (i) to (iii):

(i) a density measured according to the ASTM D1505 standard: 0.91 g/cm$^3$ to 0.93 g/cm$^3$
(ii) a melt index (MI) measured under conditions of 190°C and 2.16 kg according to the ASTM D1238 standard: 0.4 g/10 min to 1.2 g/10 min
(iii) a broad orthogonal crystalline fraction (BOCF) index calculated according to the following Equation 1: 1 or more

[Equation 1]

$$\text{BOCF index} = \{\text{Sum of regions}/188.5560176\} + \{1/297.9631479\}$$

in Equation 1,
the sum of regions is calculated through steps of obtaining a contour plot of contents of fractions according to an elution temperature (Te) and a weight average molecular weight (Log M) from CFC analysis of the polyethylene; deriving a coefficient map of the sum of regions by arbitrarily dividing the fractions according to the Te and Log M into a plurality of regions, and assigning an arbitrary coefficient to each of the regions according to a contribution of the fractions to a dart drop impact strength; obtaining an actual element value for each of the regions by substituting the coefficient map of the sum of regions into the contour plot and calculating an area of a signal for each of the regions; and calculating the sum of regions by multiplying the actual element value for each of the regions by a coefficient value assigned above for each of the regions to obtain the sum of regions.

**17.** The method of claim 12, wherein the polyethylene has a dart drop impact strength of 1800 gf or more, as measured according to the ASTM D 1709 [Method A], after producing a polyethylene film (Blown-Up Ratio (BUR)) of 2 to 3 and a film thickness of 45 $\mu$m to 55 $\mu$m using a film applicator.

**18.** A polyethylene satisfies the following requirements of (i) to (iii):

(i) a density measured according to the ASTM D1505 standard: 0.91 g/cm$^3$ to 0.93 g/cm$^3$
(ii) a melt index (MI) measured under conditions of 190°C and 2.16 kg according to the ASTM D1238 standard: 0.4 g/10 min to 1.2 g/10 min
(iii) a broad orthogonal crystalline fraction (BOCF) index calculated according to the following Equation 1: 1 or more

[Equation 1]

$$\text{BOCF index} = \{\text{Sum of regions}/188.5560176\} + \{1/297.9631479\}$$

in Equation 1,
the sum of regions is calculated through steps of obtaining a contour plot of contents of fractions according to an elution temperature (Te) and a weight average molecular weight (Log M) from CFC analysis of the polyethylene; deriving a coefficient map of the sum of regions by arbitrarily dividing the fractions according to the Te and Log M into a plurality of regions, and assigning an arbitrary coefficient to each of the regions according to a contribution of the fractions to a dart drop impact strength; obtaining an actual element value for each of the regions by substituting the coefficient map of the sum of regions into the contour plot and calculating an area of a signal for each of the regions; and calculating the sum of regions by multiplying the actual element value for each of the regions by a coefficient value assigned above for each of the regions to obtain the sum of regions.

【FIG. 1】

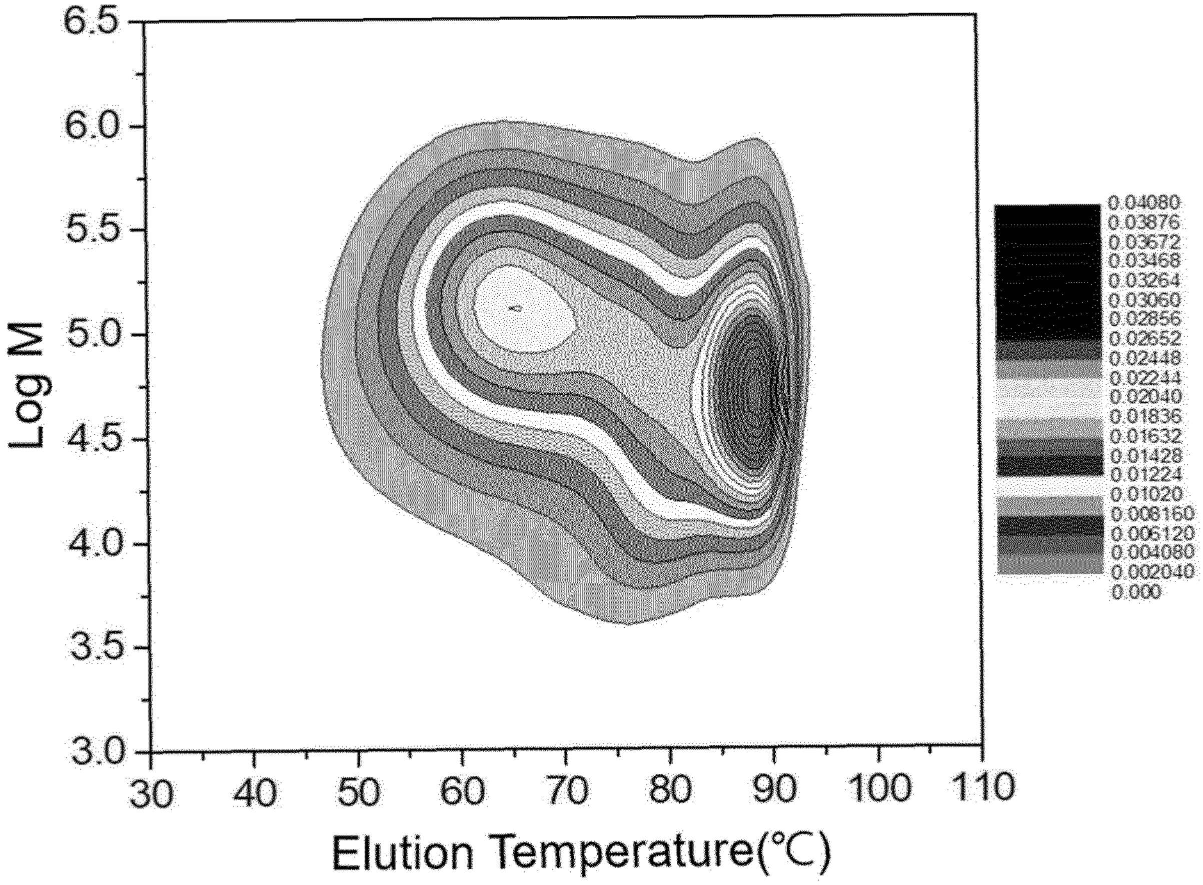
6.5
6.0
5.5
5.0
4.5
4.0
3.5
3.0
Log M
30
40
50
60
70
80
90
100
110
Elution Temperature(℃)
0.04080
0.03876
0.03672
0.03468
0.03264
0.03060
0.02856
0.02652
0.02448
0.02244
0.02040
0.01836
0.01632
0.01428
0.01224
0.01020
0.008160
0.006120
0.004080
0.002040
0.000

【FIG. 2】

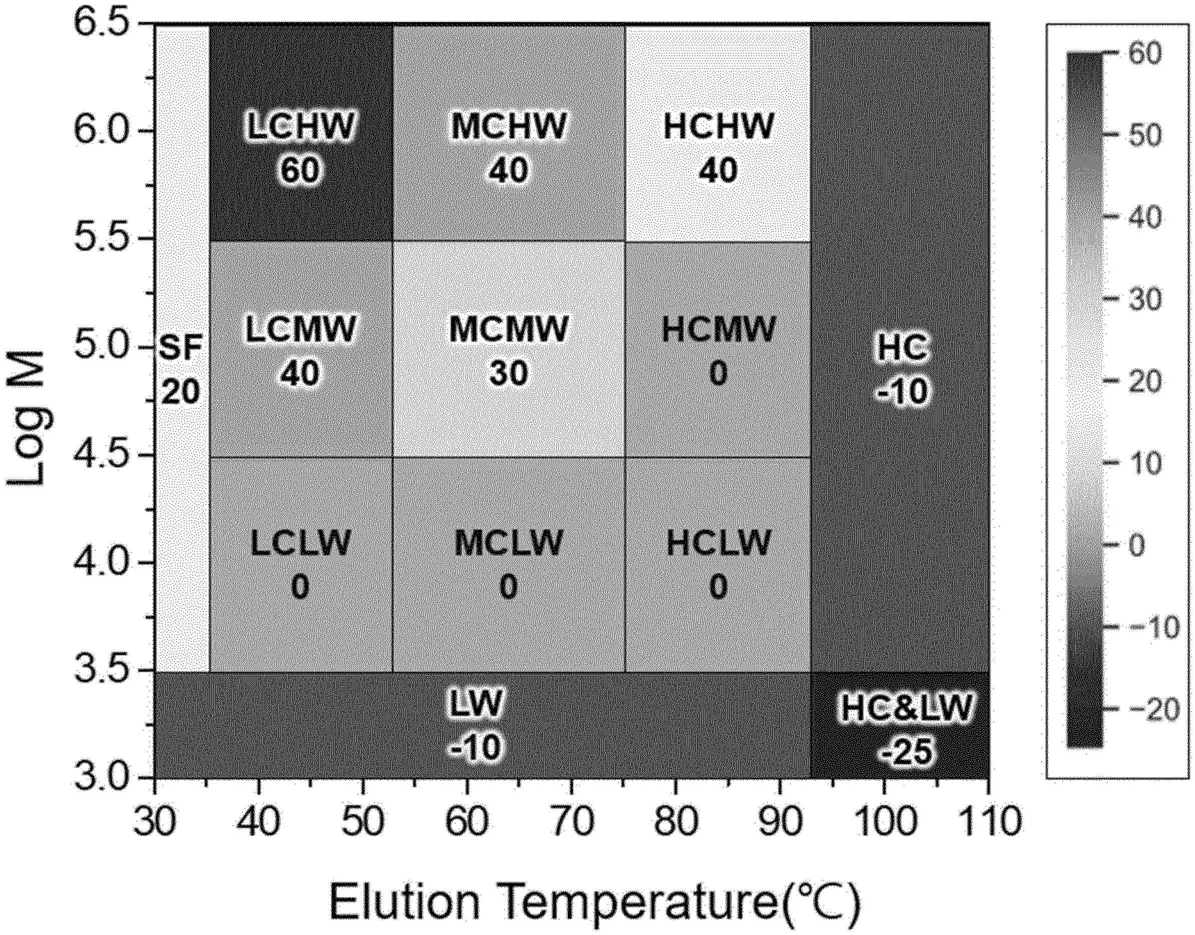
6.5
6.0
5.5
5.0
4.5
4.0
3.5
3.0
Log M
30 40 50 60 70 80 90 100 110
Elution Temperature(℃)
SF
20
LCHW
60
MCHW
40
HCHW
40
LCMW
40
MCMW
30
HCMW
0
HC
-10
LCLW
0
MCLW
0
HCLW
0
LW
-10
HC&LW
-25
60
50
40
30
20
10
0
−10
−20

【FIG. 3】

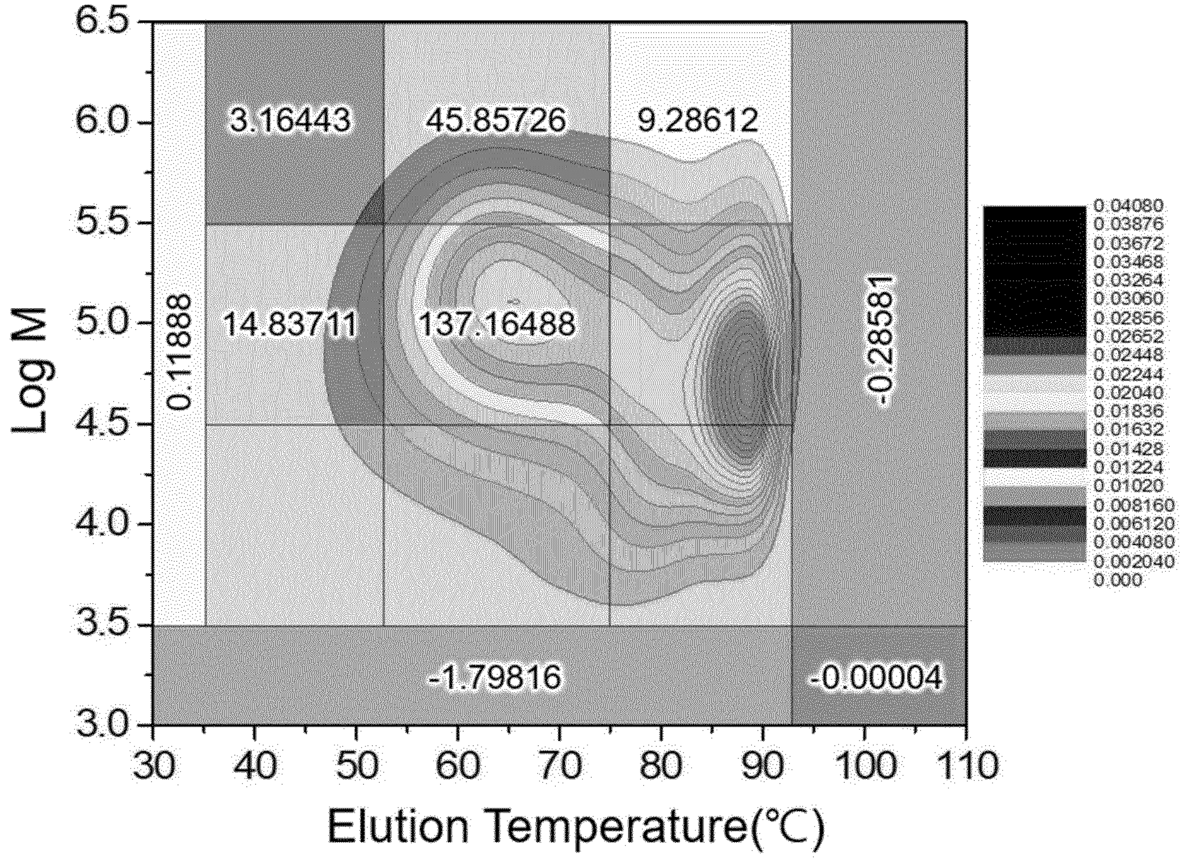
6.5
6.0
5.5
5.0
4.5
4.0
3.5
3.0
Log M
30 40 50 60 70 80 90 100 110
Elution Temperature(°C)
3.16443
45.85726
9.28612
0.11888
14.83711
137.16488
-0.28581
-1.79816
-0.00004
0.04080
0.03876
0.03672
0.03468
0.03264
0.03060
0.02856
0.02652
0.02448
0.02244
0.02040
0.01836
0.01632
0.01428
0.01224
0.01020
0.008160
0.006120
0.004080
0.002040
0.000

【FIG. 4】

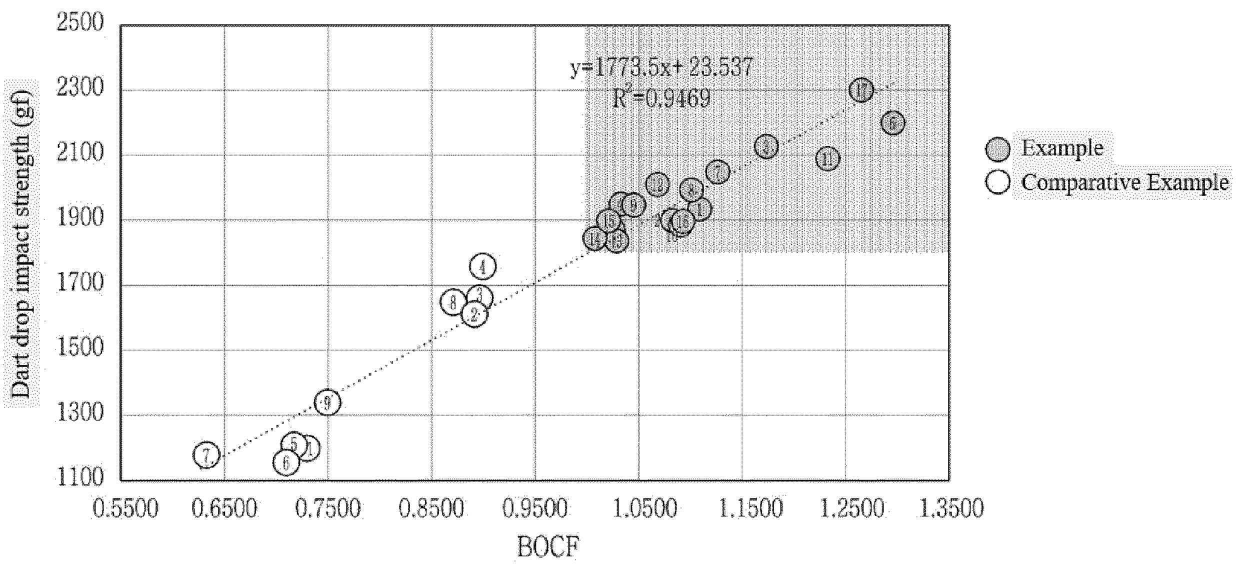
2500
2300
2100
1900
1700
1500
1300
1100
Dart drop impact strength (gf)
0.5500 0.6500 0.7500 0.8500 0.9500 1.0500 1.1500 1.2500 1.3500
BOCF
y=1773.5x+ 23.537
R²=0.9469
Example
Comparative Example

**INTERNATIONAL SEARCH REPORT**

International application No.
**PCT/KR2023/018159**

**A. CLASSIFICATION OF SUBJECT MATTER**

**C08F 210/16**(2006.01)i; **C08F 210/14**(2006.01)i; **C08F 4/659**(2006.01)i; **C08F 4/6592**(2006.01)i; **C08F 4/646**(2006.01)i; **C08F 4/02**(2006.01)i

According to International Patent Classification (IPC) or to both national classification and IPC

**B. FIELDS SEARCHED**

Minimum documentation searched (classification system followed by classification symbols)

C08F 210/16(2006.01); C07F 7/02(2006.01); C07F 7/28(2006.01); C08F 10/02(2006.01); C08F 10/06(2006.01); C08F 2/38(2006.01); C08F 4/659(2006.01); C08F 4/6592(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 메탈로센(metallocene), 에틸렌(ethylene), 올레핀(olefin), 혼성(hybrid), BOCF index(broad orthogonal crystalline fraction)

**C. DOCUMENTS CONSIDERED TO BE RELEVANT**

| Category* | Citation of document, with indication, where appropriate, of the relevant passages | Relevant to claim No. |
|---|---|---|
| A | WO 2019-124792 A1 (LG CHEM, LTD.) 27 June 2019 (2019-06-27)<br>See pages 22-25; and claims 1-9. | 1-18 |
| A | KR 10-2019-0063572 A (LOTTE CHEMICAL CORPORATION) 10 June 2019 (2019-06-10)<br>See claims 1-12. | 1-18 |
| A | WO 2017-026605 A1 (PRECIOUS CATALYSTS INC.) 16 February 2017 (2017-02-16)<br>See claims 1-9. | 1-18 |
| A | WO 2022-030768 A1 (LG CHEM, LTD.) 10 February 2022 (2022-02-10)<br>See claims 1-15. | 1-18 |
| A | KR 10-2019-0074798 A (LG CHEM, LTD.) 28 June 2019 (2019-06-28)<br>See claims 1-14; and paragraph [0185]. | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 February 2024** | **20 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/018159**

| Patent document cited in search report | Publication date (day/month/year) | Patent family member(s) | Publication date (day/month/year) |
|---|---|---|---|
| WO 2019-124792 A1 | 27 June 2019 | CN 111164111 A | 15 May 2020 |
| | | CN 111164111 B | 03 January 2023 |
| | | EP 3670544 A1 | 24 June 2020 |
| | | EP 3670544 B1 | 23 March 2022 |
| | | KR 10-2019-0074959 A | 28 June 2019 |
| | | KR 10-2248557 B1 | 06 May 2021 |
| | | US 11072670 B2 | 27 July 2021 |
| | | US 2020-0354488 A1 | 12 November 2020 |
| KR 10-2019-0063572 A | 10 June 2019 | None | |
| WO 2017-026605 A1 | 16 February 2017 | None | |
| WO 2022-030768 A1 | 10 February 2022 | CN 114555651 A | 27 May 2022 |
| | | CN 114555651 B | 24 October 2023 |
| | | EP 4029884 A1 | 20 July 2022 |
| | | KR 10-2022-0017200 A | 11 February 2022 |
| KR 10-2019-0074798 A | 28 June 2019 | KR 10-2338106 B1 | 09 December 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220176239
- KR 1020230154257
- KR 1020220067494
- KR 1020190074798
- KR 1020160067508
- KR 1020160045433
- KR 1020180161297